(19) Europäisches Patentamt
European Patent Office
Office européen des brevets

(11) **EP 3 040 633 A1**

(12) **EUROPEAN PATENT APPLICATION**
published in accordance with Art. 153(4) EPC

(43) Date of publication:
**06.07.2016 Bulletin 2016/27**

(51) Int Cl.:
***F24F 11/02*** *(2006.01)*

(21) Application number: **13892371.9**

(86) International application number:
**PCT/JP2013/073082**

(22) Date of filing: **29.08.2013**

(87) International publication number:
**WO 2015/029177 (05.03.2015 Gazette 2015/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Mitsubishi Electric Corporation
Tokyo 100-8310 (JP)**

(72) Inventors:
• **TAKEDA, Emi
Tokyo 100-8310 (JP)**
• **ITO, Shinichi
Tokyo 100-8310 (JP)**

• **UNEZAKI, Fumitake
Tokyo 100-8310 (JP)**
• **YANO, Hirotoshi
Tokyo 100-8310 (JP)**
• **MATSUMOTO, Takashi
Tokyo 100-8310 (JP)**
• **YOSHIKAWA, Toshiaki
Tokyo 100-8310 (JP)**

(74) Representative: **Moore, Graeme Patrick
Mewburn Ellis LLP
City Tower
40 Basinghall Street
London EC2V 5DE (GB)**

(54) **AIR CONDITIONING SYSTEM**

(57)    Provided is an air-conditioning system that controls an air-conditioning device 1 equipped with a compressor 21, the air-conditioning system including a controller that controls the air-conditioning device 1. The controller controls the air-conditioning device 1 by switching between normal control and power-saving control that reduces the power consumption amount compared to the normal control. In the normal control, the controller controls the rotational speed of the compressor 21 according to the difference between the indoor temperature and a set temperature. In the power-saving control, the controller changes the set temperature in a stepwise manner while maintaining an association between the set temperature and the rotational speed of the compressor 21 at which the power consumption amount corresponding to the set temperature is minimized.

FIG. 5

EP 3 040 633 A1

# FIG. 6

POWER-SAVING CONTROL SECTION

9 2

1 1 1

FIRST COMPUTA-
TIONAL UNIT
(MODEL CHARACTERISTICS)

SENSOR VALUES
(SUCH AS INDOOR TEMPERATURE,
OUTDOOR TEMPERATURE, INDOOR HUMIDITY)

A, B      1 1 3

SECOND COMPUTA-
TIONAL UNIT
(HOME CHARACTERISTICS)

SENSOR VALUES
(SUCH AS INDOOR TEMPERATURE,
OUTDOOR TEMPERATURE,
RADIATION TEMPERATURE)

D

THIRD COMPUTA-
TIONAL UNIT
(EXPRESSION 5)      1 1 5

CAPACITY $Q_0$

SENSOR VALUES
(SUCH AS INDOOR TEMPERATURE,
OUTDOOR TEMPERATURE, INDOOR HUMIDITY)

1 1 9

FOURTH COMPUTA-
TIONAL UNIT
(MODEL CHARACTERISTICS)

INDOOR AIR FLOW RATE SETTING

COMPRESSOR ROTATIONAL SPEED

**Description**

Technical Field

The present invention relates to an air-conditioning system.

Background Art

In the related art, front-loaded operating control is performed as an operation causing the indoor temperature to reach a target temperature at a specified time. Front-loaded operating control activates the air-conditioning device before the specified time. With the front-loaded operating control, the rotational speed of the compressor is controlled in the two stages of the constant-speed operation and the full-speed operation, for example. Specifically, there is an air-conditioning system that minimizes power consumption when switching the compressor from the constant-speed operation to the full-speed operation by front-loaded operating control by controlling the switchover point from the constant-speed operation to the full-speed operation (see Patent Literature 1, for example).

Citation List

Patent Literature

Patent Literature 1: Japanese Unexamined Patent Application Publication No. 63-161338 (Claim 1)

Summary of Invention

Technical Problem

As described above, an air-conditioning system of the related art like the one disclosed in Patent Literature 1 performs control that switches the compressor in the two stages of constant-speed operation and full-speed operation. Consequently, an air-conditioning system of the related art like the one disclosed in Patent Literature 1 is unable to perform continuously variable control of the rotational speed of the compressor while the compressor is operating.
Consequently, an air-conditioning system like the one disclosed in Patent Literature 1 is problematic because an excessive amount of power is consumed from the start of operation of the air-conditioning device until the indoor temperature reaches the target temperature.
The present invention has been devised to solve problems like the above, and an objective thereof is to provide an air-conditioning system capable of reducing the excessive amount of power consumed from the start of operation of the air-conditioning device until the indoor temperature reaches the target temperature.

Solution to Problem

An air-conditioning system according to the present invention is an air-conditioning system that controls an air-conditioning device equipped with a compressor, the air-conditioning system including a controller that controls the air-conditioning device. The controller controls the air-conditioning device by switching between normal control and power-saving control that reduces the power consumption amount compared to the normal control. In the normal control, the controller controls the rotational speed of the compressor according to the difference between the indoor temperature and a set temperature. In the power-saving control, the controller changes the set temperature in a stepwise manner while maintaining an association between the set temperature and the rotational speed of the compressor at which the power consumption amount corresponding to the set temperature is minimized.

Advantageous Effects of Invention

In the case of power-saving control, the present invention is able to change the set temperature in a stepwise manner while maintaining an association between the set temperature and the rotational speed of the compressor at which the power consumption amount is minimized. Thus, the present invention is able to reduce the excessive amount of power consumed from the start of operation of the air-conditioning device until the indoor temperature reaches the target temperature. Consequently, the present invention has an advantageous effect of being able to increase the operating efficiency of the air-conditioning device and thereby carry out an energy-efficient operation with low power consumption.

Brief Description of Drawings

[FIG. 1] FIG. 1 is a diagram illustrating an example of a schematic configuration of an air-conditioning device 1, which is a control target of an air-conditioning system according to Embodiment 1 of the present invention.

[FIG. 2] FIG. 2 is a diagram illustrating an example of change over time in indoor temperature and the refrigerant temperature of an indoor heat exchanger 25, respectively, in the case of performing a cooling operation at a fixed rotational speed of a compressor 21 according to Embodiment 1 of the present invention.

[FIG. 3] FIG. 3 is a diagram illustrating an example of change over time in indoor temperature and the refrigerant temperature of an indoor heat exchanger 25, respectively, in the case of performing a heating operation at a fixed rotational speed of a compressor 21 according to Embodiment 1 of the present invention.

[FIG. 4] FIG. 4 is a diagram illustrating an example of comparing the respective variations in capacity Q, input W, and operating efficiency COP that accompany variation in the compressor rotational speed between the time when operation is started and after the indoor temperature changes according to Embodiment 1 of the present invention.

[FIG. 5] FIG. 5 is a diagram illustrating an example of function blocks of an air-conditioning device control module 90 that controls an air-conditioning device 1 according to Embodiment 1 of the present invention.

[FIG. 6] FIG. 6 is a diagram illustrating an example of function blocks of a power-saving control section 92 in the case where the method of controlling the compressor rotational speed differs from normal control according to Embodiment 1 of the present invention.

[FIG. 7] FIG. 7 is a diagram illustrating an example of function blocks of a power-saving control section 92 in the case where the method of controlling the set temperature differs from normal control according to Embodiment 1 of the present invention.

[FIG. 8] FIG. 8 is a diagram illustrating an example of comparing the respective variations in a time interval Δt corresponding to a 1 degree C change in indoor temperature and a power consumption amount per time interval Δt that accompany variation in the compressor rotational speed between the time when operation is started and after the indoor temperature changes according to Embodiment 1 of the present invention.

[FIG. 9] FIG. 9 is a diagram illustrating an example of change over time in indoor temperature in the case of an air-conditioning device 1 performing power-saving control with a compressor rotational speed command according to Embodiment 1 of the present invention.

[FIG. 10] FIG. 10 is a diagram illustrating an example of change over time in compressor rotational speed in the case of an air-conditioning device 1 performing power-saving control with a set temperature command according to Embodiment 1 of the present invention.

[FIG. 11] FIG. 11 is a flowchart illustrating an example of power-saving control process as part of a control example of an air-conditioning system according to Embodiment 1 of the present invention.

[FIG. 12] FIG. 12 is a flowchart illustrating an example of power-saving timer control process as part of a control example of an air-conditioning system according to Embodiment 1 of the present invention.

[FIG. 13] FIG. 13 is a diagram illustrating another example of a schematic configuration of an air-conditioning device 1 according to Embodiment 1 of the present invention.

[FIG. 14] FIG. 14 is a diagram illustrating an example of function blocks of an air-conditioning device control module 90 that controls an air-conditioning device 1 by limiting the set temperature according to Embodiment 1 of the present invention.

[FIG. 15] FIG. 15 is a diagram illustrating an example of function blocks of an air-conditioning device control module 90 that controls an air-conditioning device 1 by limiting the current according to Embodiment 1 of the present invention.

[FIG. 16] FIG. 16 is a diagram illustrating an example of function blocks of an air-conditioning device control module 90 that controls an air-conditioning device 1 by executing power-saving timer control permission determination according to Embodiment 1 of the present invention.

[FIG. 17] FIG. 17 is a diagram illustrating an example of function blocks of an air-conditioning device control module 90 that controls an air-conditioning device 1 based on a determination of human presence in an indoor space 71 according to Embodiment 1 of the present invention.

[FIG. 18] FIG. 18 is a diagram illustrating an example of a schematic configuration of an HEMS, which is a control target of an air-conditioning system according to Embodiment 2 of the present invention.

[FIG. 19] FIG. 19 is a diagram illustrating an example of function blocks in each of an air-conditioning device control module 90 that controls an air-conditioning device 1, an HEMS controller 223, and a communication device 228 of a system according to Embodiment 2 of the present invention.

[FIG. 20] FIG. 20 is a flowchart illustrating an example of an HEMS control process executed on the basis of distance or a estimated arrival time as part of a control example of an air-conditioning system according to Embodiment 2 of the present invention.

[FIG. 21] FIG. 21 is a flowchart illustrating an example of an HEMS control process executed on the basis of a lifestyle pattern as part of a control example of an air-conditioning system according to Embodiment 2 of the present invention.

[FIG. 22] FIG. 22 is a diagram illustrating an example of various control modules being installed onto various devices from recording media 401, 403, and 405 or a server device 411 according to Embodiment 3 of the present invention.

Description of Embodiments

Hereinafter, exemplary embodiments will be described in detail using the drawings. Note that, in the drawings hereinafter, the relative sizes of respective structural members may differ from actual sizes in some cases. Also, in the drawings hereinafter, elements denoted with the same sign are the same or corresponding elements, and this holds true similarly throughout the text of this specification.

Furthermore, the aspect of the structural elements expressed throughout the text of this specification is merely illustrative, and such structural elements are not limited to what is described. Additionally, the present invention is not limited by the exemplary embodiments and drawings. By the same token, it is possible to modify the exemplary embodiments and drawings within a scope that does not alter the gist of the present invention.

In addition, the steps describing a program that carries out the operation of the exemplary embodiments are processing operations conducted in a time series following the stated order, but may also include processing operations executed in parallel or individually without strictly being processed in a time series.

In addition, the respective functions described in the exemplary embodiments may be realized in hardware, or realized in software. In other words, the respective block diagrams described in the exemplary embodiments may be considered to be hardware block diagrams, or considered to be software function block diagrams. For example, each block diagram may be realized in hardware such as a circuit device, or realized in software executed on a computational device such as a processor (not illustrated).

In addition, it is sufficient for each block in the block diagrams described in the exemplary embodiments to carry out that function, and the configuration is not required to be separated into these respective blocks. Note that in each of Embodiments 1 to 3, items not particularly described are taken to be similar to Embodiments 1 to 3, and the same signs are used to denote the same functions and structural elements.

In addition, each of Embodiments 1 to 3 may be carried out individually, or carried out in combination with each other. In either case, the advantageous effects described hereinafter are exhibited. Also, the various specific example settings and example flags described in the exemplary embodiments merely illustrate one example, and are not particularly limited thereto.

Also, in the exemplary embodiments, the term "system" represents the totality of a device made up of multiple devices, or the totality of a function made up of multiple functions.

Embodiment 1.

<Overview>

In the case of power-saving control, an air-conditioning system changes the set temperature in a stepwise manner while maintaining an association between the set temperature and the rotational speed of a compressor 21 (discussed later) at which the power consumption amount is minimized. Thus, the air-conditioning system reduces the power consumption amount used excessively. Consequently, the air-conditioning system reduces the excessive amount of power consumed from the start of operation of an air-conditioning device 1 (discussed later) until the indoor temperature reaches the target temperature. As a result, the air-conditioning system increases the operating efficiency of the air-conditioning device 1 (discussed later), and carries out the energy-efficient operation with low power consumption. Note that the present invention is suited to an air-conditioning system that performs activation control while reducing the power consumption amount for cooling or heating.

<Configuration of air-conditioning device 1>

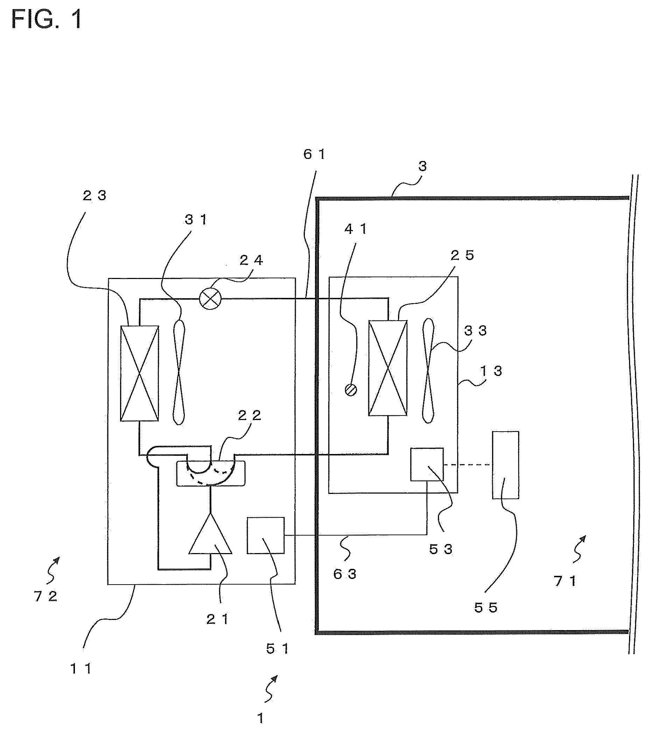

FIG. 1 is a diagram illustrating an example of a schematic configuration of an air-conditioning device 1, which is a control target of an air-conditioning system according to Embodiment 1 of the present invention. As illustrated in FIG. 1, the air-conditioning device 1 is equipped with an outdoor unit 11 and an indoor unit 13. The outdoor unit 11 is provided on the outside of a house 3, for example. The indoor unit 13 is provided inside the house 3, for example. The air-conditioning device 1 air-conditions an indoor space 71. In other words, the indoor space 71 is a space whose air is the target of control by the air-conditioning device 1.

Consequently, the indoor unit 13 is installed in a location enabling the supply of air-conditioned air into the indoor space 71, such as on a wall constituting part of the indoor space 71, for example. The air-conditioning device 1 provides air-conditioned air from the indoor unit 13, providing cooling by blowing out cool air, or providing heating by blowing out warm air, for example. The air-conditioning device 1 is equipped with a vapor compression refrigeration cycle. Refrigerant flows through a refrigerant pipe 61 that connects the outdoor unit 11 and the indoor unit 13, and various signals are forwarded along a communication line 63 that connects the outdoor unit 11 and the indoor unit 13.

The outdoor unit 11 is equipped with a compressor 21, a four-way valve 22, an outdoor heat exchanger 23, and an expansion valve 24. In addition, the outdoor unit 11 is equipped with an outdoor fan 31 beside the outdoor heat exchanger 23. The outdoor unit 11 is also equipped with a measurement and control device 51. The indoor unit 13 is equipped with an indoor heat exchanger 25. In addition, the indoor unit 13 is equipped with an indoor fan 33 beside the indoor heat exchanger 25. The indoor unit 13 is also equipped with a measurement and control device 53. The indoor unit 13 is also equipped with an indoor temperature sensor 41. In addition, a remote control 55 is provided in the indoor space 71. The remote control 55 transmits and receives various signals to and from the measurement and control device 53 provided in the indoor unit 13.

The compressor 21, the four-way valve 22, the outdoor heat exchanger 23, the expansion valve 24, and the indoor heat exchanger 25 are cyclically connected by the refrigerant pipe 61 to form the refrigeration cycle. Driving the outdoor fan 31 produces a negative pressure in the outdoor unit 11, thereby suctioning the outdoor air of an outdoor space 72 into the outdoor unit 11. The suctioned outdoor air is supplied to the outdoor heat exchanger 23 and passes through the outdoor heat exchanger 23, and the air inside the outdoor unit 11 is blown out from the outdoor unit 11 into the outdoor space 72. Driving the indoor fan 33 produces a negative pressure in the indoor unit 13, thereby suctioning the indoor air of the indoor space 71 into the indoor unit 13. The suctioned indoor air is supplied to the indoor heat exchanger 25 and passes through the indoor heat exchanger 25, and the air inside the indoor unit 13 is blown out from the indoor unit 13 into the indoor space 71.

The compressor 21 compresses low temperature and low pressure refrigerant to produce high temperature and high pressure refrigerant. The compressor 21 is driven by an inverter, with the operating capacity being controlled according to the air-conditioning state. The four-way valve 22 is connected to the discharge side of the compressor 21, and switches the flow of refrigerant according to the operation of the air-conditioning device 1, such as the cooling operation or the heating operation, for example. The outdoor heat exchanger 23 exchanges heat between cooling or heating energy supplied from the refrigerant flowing through the refrigeration cycle, and the outdoor air of the outdoor space 72. The expansion valve 24 is connected between the outdoor heat exchanger 23 and the indoor heat exchanger 25, and is configured as a valve with a variably controllable opening degree, such as an electronic expansion valve, for example. By controlling the opening degree, refrigerant is depressurized to expand. The indoor heat exchanger 25 exchanges heat between cooling or heating energy supplied from the refrigerant flowing through the refrigeration cycle, and the indoor air of the indoor space 71.

Consequently, the air-conditioning device 1 supplies the indoor space 71 with indoor air that has been heat-exchanged by the indoor heat exchanger 25 as air-conditioned air, and thereby cools or heats the indoor space 71. At this point, measurement information, which is a detection result from the indoor temperature sensor 41, is supplied to the measurement and control device 53. The measurement and control device 53 supplies measurement information, which is a detection result from the indoor temperature sensor 41, to the measurement and control device 51 via the communication line 63. Note that the communication line 63 may be wired or wireless, and is not particularly limited in terms of the communication medium.

The measurement and control device 51 and the measurement and control device 53 control the operation of the air-conditioning device 1 according to a preinstalled control program, on the basis of detection information and operation information supplied from various sensors installed in the air-conditioning device 1, such as the indoor temperature sensor 41, and settings information set by a user of the air-conditioning device 1. In other words, the measurement and control device 51 and the measurement and control device 53 centrally control the air-conditioning device 1 overall. For example, the measurement and control device 51 and the measurement and control device 53 are made up of a microcontroller or other component.

For example, the measurement and control device 51 controls the driving frequency of the compressor 21, the switching of the four-way valve 22, the rotational speed of the outdoor fan 31, and the opening degree of the expansion valve 24. Also, for example, the measurement and control device 53 controls the rotational speed of the indoor fan 33. By operating in this way, the measurement and control device 51 and the measurement and control device 53 control the operation of the air-conditioning device 1. Note that the measurement and control device 51 may also control the rotational speed of the indoor fan 33, and the measurement and control device 53 may control the driving frequency of the compressor 21, the switching of the four-way valve 22, the rotational speed of the outdoor fan 31, and the opening degree of the expansion valve 24.

As described above, the indoor temperature sensor 41 is installed in the indoor unit 13. The indoor temperature sensor 41 measures the temperature of the indoor air of the indoor space 71 suctioned into the indoor unit 13, and supplies a measurement result to the measurement and control device 53 and other components. Note that, although not illustrated in the drawings, various other sensors are also installed in the air-conditioning device 1.

For example, a discharge-side pressure sensor is installed on the discharge side of the compressor 21. The discharge-side pressure sensor measures the pressure of refrigerant discharged from the compressor 21. As another example, a suction-side pressure sensor is installed on the suction side of the compressor 21. The suction-side pressure sensor measures the pressure of refrigerant suctioned into the compressor 21. As another example, a discharge-side temperature sensor is installed on the discharge side of the compressor 21. The discharge-side temperature sensor measures the temperature of refrigerant discharged from the compressor 21. As another example, a suction-side temperature sensor is installed on the suction side of the compressor 21. The suction-side temperature sensor measures the temperature of refrigerant suctioned into the compressor 21. As another example, an outdoor temperature sensor is installed in the outdoor unit 11. The outdoor temperature sensor measures the temperature of the outside air of the outdoor space 72.

Next, as a presupposition of the air-conditioning device 1 described above, suppose that the user of the air-conditioning device 1 operates the remote control 55 or other component to issue an operation start command to the air-conditioning device 1, for example. Since an operating mode such as the cooling operation or the heating operation is included in the operation start command, the operating mode is set in the air-conditioning device 1 at the same time as the operation start command.

<Cooling operation>

For example, if cooling operation is selected as the operating mode, the operation of the refrigeration cycle is as follows. Refrigerant discharged from the compressor 21 passes through the four-way valve 22 and flows to the outdoor heat exchanger 23. The refrigerant flowing to the outdoor heat exchanger 23 condenses and liquefies by exchanging heat with outdoor air suctioned in from the outdoor space 72, and flows to the expansion valve 24. The refrigerant flowing to the expansion valve 24 is depressurized by the expansion valve 24, and flows to the indoor heat exchanger 25. The refrigerant flowing to the indoor heat exchanger 25 evaporates and gasifies by exchanging heat with indoor air suctioned in from the indoor space 71, passes through the four-way valve 22, and is again suctioned into the compressor 21. By having the refrigerant flow in this way, the indoor air suctioned in from the indoor space 71 is cooled by the indoor heat exchanger 25. The amount of heat exchanged between the refrigerant and indoor air in the indoor heat exchanger 25 is called the cooling capacity Q. The cooling capacity Q is adjusted by varying the rotational speed of the compressor 21.

<Heating operation>

For example, if heating operation is selected as the operating mode, the operation of the refrigeration cycle is as follows. The refrigerant discharged from the compressor 21 passes through the four-way valve 22 and flows to the indoor heat exchanger 25. The refrigerant flowing to the indoor heat exchanger 25 condenses and liquefies by exchanging heat with indoor air suctioned in from the indoor space 71, and flows to the expansion valve 24. The refrigerant flowing to the expansion valve 24 is depressurized by the expansion valve 24, and flows to the outdoor heat exchanger 23. The refrigerant flowing to the outdoor heat exchanger 23 evaporates and gasifies by exchanging heat with outdoor air suctioned in from the outdoor space 72, passes through the four-way valve 22, and is again suctioned into the compressor 21. By having the refrigerant flow in this way, the indoor air suctioned in from the indoor space 71 is heated by the indoor heat exchanger 25. The amount of heat exchanged between the refrigerant and indoor air in the indoor heat exchanger 25 is called the heating capacity Q. The heating capacity Q is adjusted by varying the rotational speed of the compressor 21.

Note that although the above describes one air-conditioning device 1 as the control target of the air-conditioning system, the number of control targets is not particularly limited. For example, multiple air-conditioning devices 1 may be control targets of the air-conditioning system. Also, the above describes the air-conditioning device 1 as including one outdoor unit 11 and one indoor unit 13, but the configuration of the air-conditioning device 1 is not particularly limited. For example, an air-conditioning device 1 made up of one outdoor unit 11 and multiple indoor units 13 may be a control target of the air-conditioning system. In addition, an air-conditioning device 1 which includes one outdoor unit 11, a relay unit (not illustrated), a check valve (not illustrated), and multiple indoor units 13 and which performs simultaneous cooling and heating operation may be a control target of the air-conditioning system.

In addition, from the relationship illustrated in the drawings, the outdoor unit 11 and the indoor unit 13 are arranged at positions a short distance away from each other, but the arrangement locations of the outdoor unit 11 and the indoor unit 13 are not particularly limited. For example, the outdoor unit 11 may be placed on the roof of a building (not illustrated), while the indoor unit 13 may be placed above the ceiling.

An air-conditioning device 1 that constitutes a refrigeration cycle is basically sufficient as a control target of the air-conditioning system, and features such as the detailed configuration of the control target are not particularly limited.

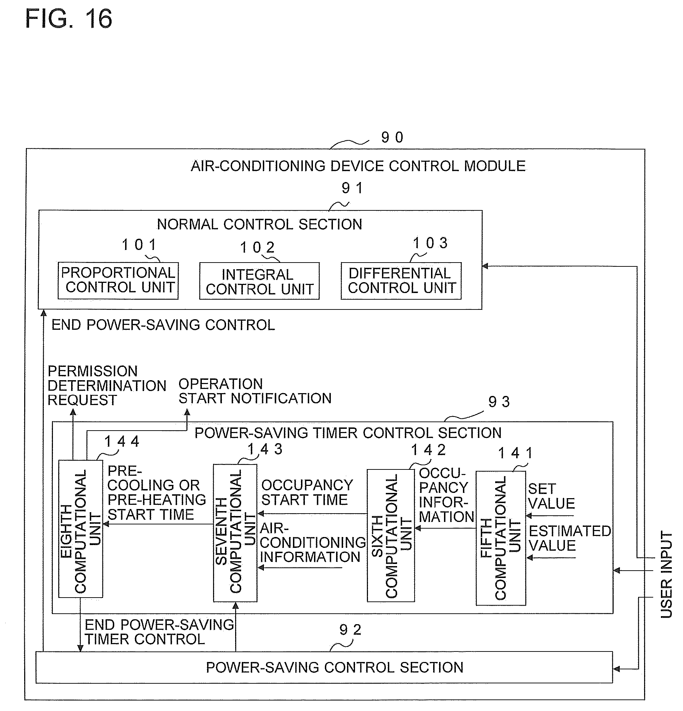

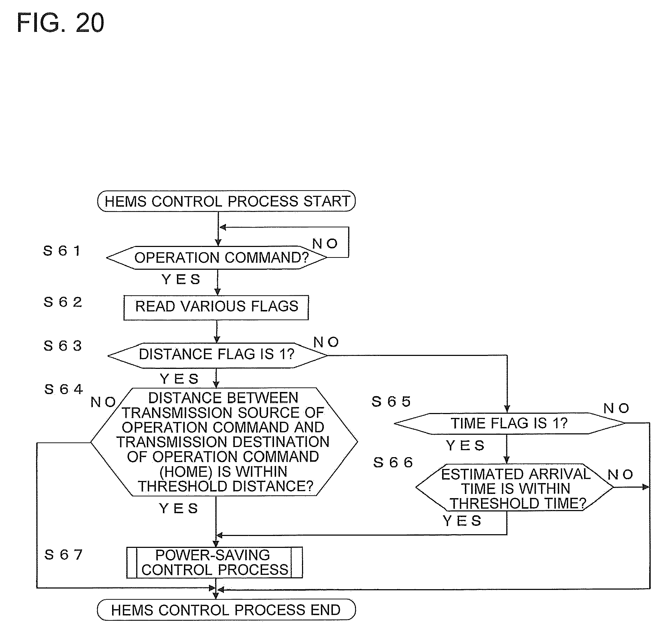

In addition, the functional configuration of the air-conditioning system discussed later may be implemented in the measurement and control device 51, for example, but the implementation location is not particularly limited. For example, the functional configuration of the air-conditioning system may also be implemented in the measurement and control device 53. As another example, the functional configuration of the air-conditioning system may also be implemented in an HEMS controller 223 discussed later with reference to FIG. 16. As another example, the functional configuration of the air-conditioning system may also be implemented in a server device 411 discussed later with reference to FIG. 20.

In short, the functional configuration of the air-conditioning system is not particularly limited in terms of implementation location. For example, when supposing that multiple terminals 229 discussed later with reference to FIG. 16 are connected via a public line 227 discussed later with reference to FIG. 16, the functional configuration of the air-conditioning system may be implemented by being physically broken up and distributed among the multiple terminals 229. For example, a function of power-saving control discussed later and a function of normal control discussed later may be implemented in physically distant locations, and organically function as a single system via a communication medium such as the public line 227. In other words, it is sufficient for the air-conditioning system to be able to control the air-conditioning device 1.

<State changes in refrigeration cycle>

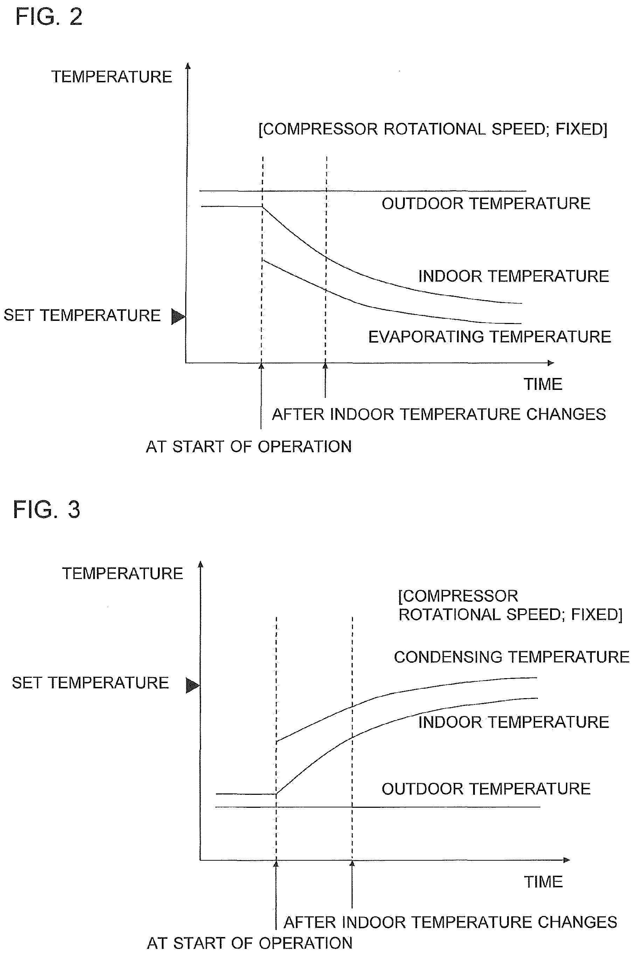

Next, various phenomena and changes in various parameters produced by the flow of refrigerant through the refrigerant circuit will be described using FIGS. 2 to 4. FIG. 2 is a diagram illustrating an example of change over time in indoor temperature and the refrigerant temperature of an indoor heat exchanger 25, respectively, in the case of performing the cooling operation at a fixed rotational speed of a compressor 21 according to Embodiment 1 of the present invention. As illustrated in FIG. 2, in the case of the cooling operation, the indoor heat exchanger 25 functions as an evaporator. Thus, the saturation temperature of the refrigerant is called the evaporating temperature. In the case of the cooling operation, if the cooling operation starts at the start of operation and the indoor temperature falls, the air temperature passing through around the indoor heat exchanger 25 goes down. Consequently, the low temperature refrigerant inside the indoor heat exchanger 25 evaporates and gasifies less readily, the refrigerant gas quantity decreases, and thus the pressure and the evaporating temperature fall.

FIG. 3 is a diagram illustrating an example of change over time in indoor temperature and the refrigerant temperature of an indoor heat exchanger 25, respectively, in the case of performing the heating operation at a fixed rotational speed of a compressor 21 according to Embodiment 1 of the present invention. As illustrated in FIG. 3, in the case of the heating operation, the indoor heat exchanger 25 functions as a condenser. Thus, the saturation temperature of the refrigerant is called the condensing temperature. In the case of the heating operation, if the heating operation starts at the start of operation and the indoor temperature rises, the air temperature passing through around the indoor heat exchanger 25 goes up. Consequently, the high temperature refrigerant inside the indoor heat exchanger 25 condenses and liquefies less readily, the refrigerant gas quantity increases, and thus the pressure and the condensing temperature rise.

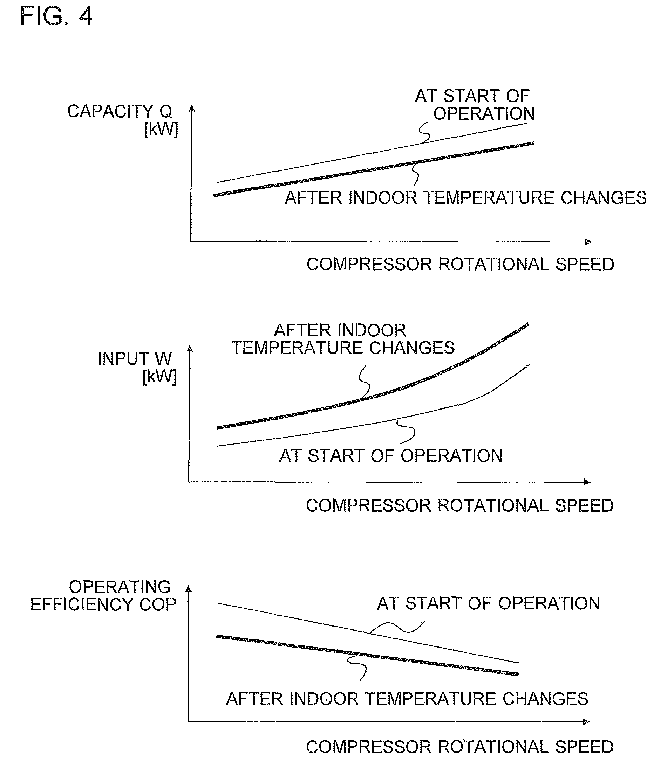

FIG. 4 is a diagram illustrating an example of comparing the respective variations in capacity (cooling capacity and heating capacity) Q, input W, and operating efficiency COP that accompany variation in the compressor rotational speed between the time when operation is started and after the indoor temperature changes according to Embodiment 1 of the present invention. As described above, in the case of the cooling operation, the pressure of the refrigerant inside the indoor heat exchanger 25 falls from the start of operation to after the indoor temperature changes, and thus the density of refrigerant suctioned by the compressor 21 decreases, causing the flow rate of refrigerant circulating through the refrigeration cycle to decrease. Thus, the cooling capacity Q decreases from the start of operation to after the indoor temperature changes. Also, the suction pressure of the compressor 21, or, the pressure on the low-pressure side, goes down, thereby widening the pressure difference with the discharge pressure of the compressor 21, or, the pressure on the high-pressure side, and thus the input W of the compressor 21 increases.

Also, as described above, in the case of the heating operation, the pressure of the refrigerant inside the indoor heat exchanger 25 rises from the start of operation to after the indoor temperature changes, and thus the heating capacity Q decreases from the start of operation to after the indoor temperature changes. Also, the discharge pressure of the compressor 21, or, the pressure on the high-pressure side, goes up, thereby widening the pressure difference with the suction pressure of the compressor 21, or, the pressure on the low-pressure side, and thus the input W of the compressor 21 increases.

As a result of the above, in the case of the cooling operation, the cooling capacity Q falls from the start of operation to after the indoor temperature changes while the input W tends to increase from the start of operation to after the indoor temperature changes, and thus the operating efficiency, or coefficient of performance (COP), falls from the start of operation to after the indoor temperature changes. On the other hand, in the case of the heating operation, the heating capacity Q falls from the start of operation until after the indoor temperature changes while the input W tends to increase from the start of operation until after the indoor temperature changes, and thus the operating efficiency COP falls from the start of operation until after the indoor temperature changes. In other words, in both cases of the cooling operation and the heating operation, the operating efficiency COP of the air-conditioning device 1 falls from the start of operation until after the indoor temperature changes. Note that the operating efficiency COP is a value computed by dividing the cooling capacity Q or the heating capacity Q by the input W. In other words, the operating efficiency COP is value obtained by dividing the capacity Q by the input W.

FIG. 4 will be referred to examine the relationship among the capacity Q, the input W, and the operating efficiency COP from the perspective of changes in the rotational speed of the compressor 21. As described above, as the rotational speed of the compressor 21 increases, the suction pressure decreases and the discharge pressure rises relatively, and thus the pressure ratio increases. As a result, as illustrated in FIG. 4, the input W increases while the operating efficiency COP decreases. At this point, a first-order approximation of the operating efficiency COP in terms of the capacity Q is expressed in the following Expression 1.

[Math. 1]

$$COP = A \cdot Q + B \qquad (1)$$

Herein, A and B are parameters indicating the operating efficiency COP characteristics, and are determined on the basis of the configuration of the air-conditioning device 1 and the environmental conditions of the air-conditioning device 1. As illustrated in Expression 1, the operating efficiency COP is expressed as the result of multiplying the capacity Q by A, and then adding B. In addition, as described above, since the operating efficiency COP is the value obtained by dividing the capacity Q by the input W, from this relationship the following Expression 2 is derived.

[Math. 2]

$$W = \frac{Q}{COP} = \frac{Q}{(A \cdot Q + B)} \qquad (2)$$

In other words, as illustrated in Expression 2, the input W is expressed by dividing the capacity Q by Expression 1. Next, the operating modes executed by the air-conditioning device 1 will be described.

<Operating modes>

The air-conditioning system is equipped with normal control and power-saving control as operating modes, for example. The normal control controls the rotational speed of the compressor 21 according to the difference between the indoor temperature and a set temperature. The power-saving control reduces power consumption amount compared to the normal control. The air-conditioning system switches between the normal control and the power-saving control by the turning on and off of a power-saving mode selected by the user, for example. The air-conditioning system switches to the power-saving control when the turning on of the power-saving mode is selected, and switches to the normal control when the turning off of the power-saving mode is selected. For example, when the operation start command of the air-conditioning device 1 is transmitted to the indoor unit 13 in a state in which the user has selected the power-saving mode via the remote control 55, the air-conditioning device 1 performs operation according to the power-saving control.

Additionally, if the user selects an operating mode, such as the power-saving mode, and inputs a specified time for performing timer-scheduled operation, the air-conditioning system is able to perform a pre-cooling or pre-heating operation, which is front-loaded operating control by the power-saving control that activates the air-conditioning device 1 before the specified time so that the indoor temperature reaches a target temperature by the specified time. Note that the above description describes an example of the remote control 55 being used to select the power-saving mode, transmit the operation start command, and configure the timer scheduling, but an embodiment is not particularly limited to the above.

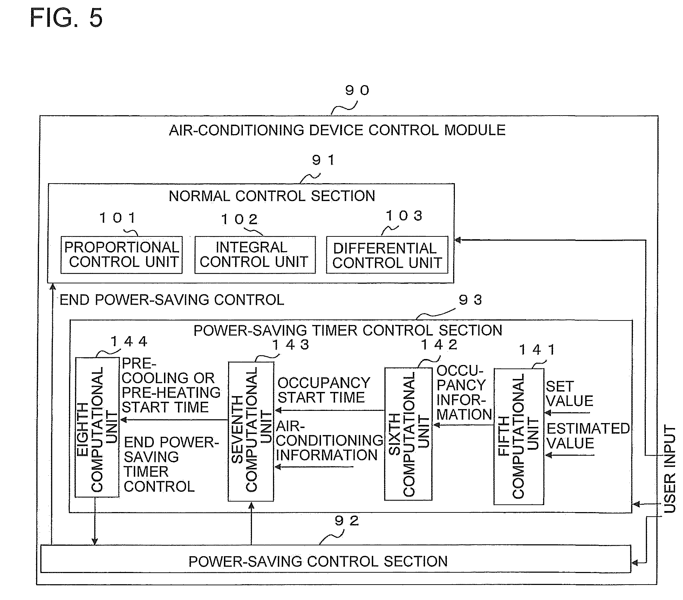

Next, to describe an example of the functional configuration of the air-conditioning system, an air-conditioning device control module 90 will be described using FIG. 5 as example function blocks of the air-conditioning system. FIG. 5 is a diagram illustrating an example of function blocks of an air-conditioning device control module 90 that controls an air-conditioning device 1 according to Embodiment 1 of the present invention. As illustrated in FIG. 5, the air-conditioning device control module 90 is equipped with a normal control section 91, a power-saving control section 92, and a power-saving timer control section 93.

<Normal control>

The normal control section 91 executes the normal control, and is equipped with a proportional control unit 101, an integral control unit 102, and a differential control unit 103, for example. The normal control section 91 starts the normal control when the end of the power-saving control is reported or when a direct command is supplied from the user. When the operating mode is the normal control, the air-conditioning device 1 executes operation so that the measured value from the indoor temperature sensor 41 that senses a representative temperature of the indoor space 71 as the indoor temperature becomes the set temperature set by the user.

For example, the proportional control unit 101 performs proportional control. Specifically, when the temperature difference between the indoor temperature and the set temperature is larger than a preset value, the proportional control unit 101 issues an operating command to increase the rotational speed of the compressor 21, thereby causing the cooling capacity Q of the air-conditioning device 1 or the heating capacity Q of the air-conditioning device 1 to increase and make the indoor temperature converge on the set temperature more quickly.

For example, the integral control unit 102 performs integral control. Specifically, when it take time for the indoor temperature to reach the set temperature because the time rate of change in the indoor temperature is smaller than a preset value, the integral control unit 102 issues an operating command to increase the rotational speed of the compressor 21, thereby causing the cooling capacity Q of the air-conditioning device 1 or the heating capacity Q of the air-conditioning device 1 to increase and make the indoor temperature reach the set temperature. As another example, when the indoor temperature suddenly changes because of the opening or closing of a window (not illustrated) or another factor, the differential control unit 103 changes the operating capacity of the compressor 21 according to the time variation of the indoor temperature.

For example, the air-conditioning device 1 stops the operation of the compressor 21 when the indoor temperature reaches the set temperature, and reactivates the compressor 21 if the temperature difference between the indoor temperature and the set temperature becomes equal to or greater than a preset value. Note that in the normal control, since the temperature difference between the indoor temperature and the set temperature is large at the start of operation, the rotational speed of the compressor 21 rises, the operating efficiency COP falls, and the power consumption amount increases.

<Power-saving control>

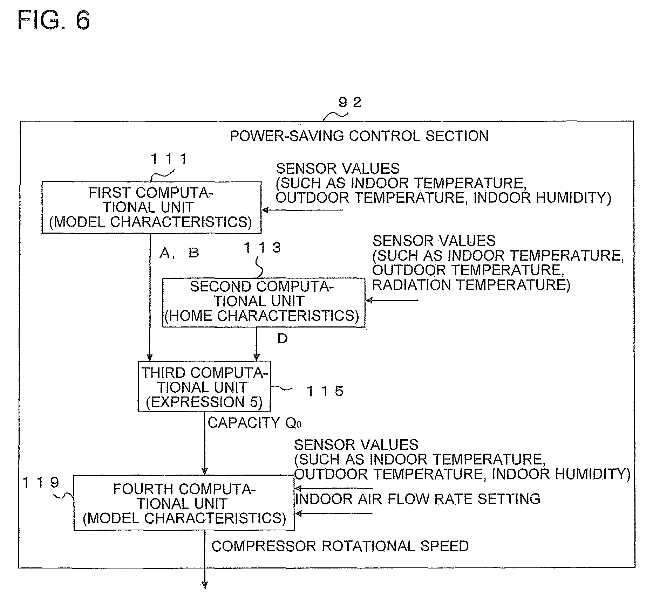

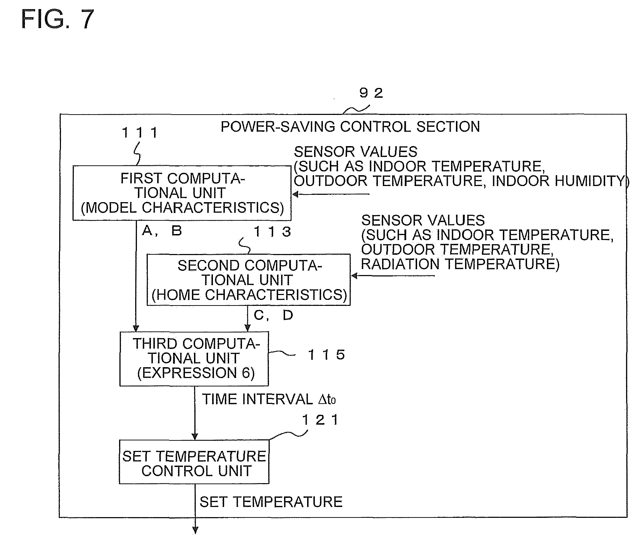

The power-saving control section 92 executes the power-saving control, and as discussed later with reference to FIG. 6, is equipped with a first computational unit 111, a second computational unit 113, a third computational unit 115, and a fourth computational unit 119, for example. As another example, as discussed later with reference to FIG. 7, the power-saving control section 92 may also be equipped with the first computational unit 111, the second computational unit 113, the third computational unit 115, and a set temperature control unit 121. When the power-saving control ends, the power-saving control section 92 reports the end of the power-saving control to the normal control section 91.

Expression 3 expresses the time interval $\Delta t$ needed to heat or cool the indoor temperature by 1 degree C, on the basis of the heat capacity C of the room (that is, the indoor space 71), the capacity Q of the air-conditioning device 1, the heat flowing through the outer walls of the house 3, the heat caused by ventilation, solar radiation heat, and the thermal load D which signifies heat produced internally by sources such as lighting 235 (discussed later) and people.

[Math. 3]

$$\Delta t = \frac{C}{(Q - D)} \tag{3}$$

Expression 4 represents the power consumption amount that is consumed when heating or cooling the indoor temperature by 1 degree C, on the basis of the time interval $\Delta t$ and the input W.

[Math. 4]

$$\text{Power consumption amount} = W \cdot \Delta t = \left\{ \frac{Q}{(A \cdot Q + B)} \right\} \cdot \left\{ \frac{C}{(Q - D)} \right\} \tag{4}$$

Note that the input W is computed from Expression 2, while the time interval $\Delta t$ is computed from Expression 3. Next, Expression 5, which relates to the capacity $Q_0$ of the minimum point of the power consumption amount, is derived from Expression 4. Expression 5 is a formula for computing the minimum point of the power consumption amount, or, the minimum power consumption amount.

[Math. 5]

$$Q_0 = \sqrt{\frac{B \cdot D}{(-A)}} \qquad (5)$$

Next, the third computational unit 115 derives Expression 6, which computes the time interval $\Delta t_0$ corresponding to the minimum point of the power consumption amount, from Expression 3 and Expression 5.

[Math. 6]

$$\Delta t_0 = \frac{C}{(Q_0 - D)} = \frac{C}{\left( \sqrt{\dfrac{B \cdot D}{(-A)}} - D \right)} \qquad (6)$$

The power-saving control section 92 has two possible patterns, illustrated in FIGS. 6 and 7.

FIG. 6 is a diagram illustrating an example of function blocks of a power-saving control section 92 in the case where the method of controlling the compressor rotational speed differs from the normal control according to Embodiment 1. FIG. 6 presupposes that the power-saving control section 92 is built into the indoor unit 13 or the outdoor unit 11, for example. In other words, in this example, the output of the power-saving control section 92 becomes the compressor rotational speed. The first computational unit 111 computes A and B of the operating efficiency COP characteristics from sensor values such as the indoor temperature, the outdoor temperature, and the indoor humidity. The second computational unit 113 computes the thermal load D from sensor values. The third computational unit 115 computes the capacity $Q_0$ from A and B of the operating efficiency COP characteristics, and from the thermal load D. The fourth computational unit 119 computes the compressor rotational speed from factors such as the capacity $Q_0$, sensor values, and an indoor airflow rate setting.

FIG. 7 is a diagram illustrating an example of function blocks of a power-saving control section 92 in the case where the method of controlling the set temperature differs from the normal control according to Embodiment 1. FIG. 7 presupposes that the power-saving control section 92 is built into a unit external to the indoor unit 13 and the outdoor unit 11, for example. In other words, in this example, the output of the power-saving control section 92 becomes the set temperature. In the normal control, the set temperature is set via a manual operation by the user from the remote control 55, but in this case, the set temperature is changed automatically. The first computational unit 111 computes A and B of the operating efficiency COP characteristics from sensor values such as the indoor temperature, the outdoor temperature, and the indoor humidity. The second computational unit 113 computes the heat capacity C and the thermal load D from sensor values. The third computational unit 115 computes the time interval $\Delta t_0$ from A and B of the operating efficiency COP characteristics, the heat capacity C, and the thermal load D. In the set temperature control unit 121, the set temperature is changed according to the time interval $\Delta t_0$. The power-saving control section 92 may also supply the set temperature to the normal control section 91 to have the normal control section 91 compute the compressor rotational speed, or supply the set temperature to the outdoor unit 11 to have the outdoor unit 11 compute the compressor rotational speed. A compressor control unit 122 is the same as the normal control section 91, and controls the compressor rotational speed according to the difference between the set temperature and the indoor temperature.

Note that the pattern illustrated in FIG. 6 and the pattern illustrated in FIG. 7 are separate, so that if either function is installed onboard, the other function is not installed onboard. For example, if the compressor rotational speed is output from the power-saving control section 92, the set temperature is not output from the power-saving control section 92. As another example, if the set temperature is output from the power-saving control section 92, the compressor rotational speed is not output from the power-saving control section 92.

However, the configuration of the power-saving control section 92 is not limited to the above description. For example, the respective functions described above may also be integrated and configured as a single module. As another example, if the functions described above are configured externally to the power-saving control section 92, it is sufficient for the power-saving control section 92 to be configured to call the external functions configured in this way. In any case, it is sufficient for the power-saving control section 92 to utilize an algorithm prescribed by Expressions 1 to 6 as described above, and thereby compute, directly or indirectly, the compressor rotational speed or the set temperature corresponding to the minimum point of the power consumption amount.

Specifically, the third computational unit 115 associates each of the minimum power consumption amount, the time interval $\Delta t_0$, the compressor rotational speed, the thermal load D, and the set temperature, and supplies the minimum power consumption amount, the time interval $\Delta t_0$, the compressor rotational speed, the thermal load D, and the set temperature as minimum power consumption amount related data to a storage section, for example. The storage section stores data related to the compressor rotational speed in compressor rotational speed data groups, stores data related to the minimum power consumption amount in minimum power consumption amount data groups, stores data related to the time interval $\Delta t_0$ in time interval $\Delta t_0$ data groups, stores data related to the thermal load D in thermal load D data groups, and stores data related to the set temperature in set temperature data groups. Note that the various data groups described above are one example, and the data is not particularly limited to these groups. In short, it is sufficient for each of the minimum power consumption amount, the time interval $\Delta t_0$, the compressor rotational speed, the thermal load D, and the set temperature to be associated respectively.

The fourth computational unit 119 computes the comwpressor rotational speed on the basis of the set temperature, the indoor temperature, a step size, the target temperature, and the minimum power consumption amount related data. Herein, the step size is the amount of change by which to change the set temperature in a stepwise manner. The step size is set as an integer value, for example, but is not particularly limited to an integer value.

Note that although the above description describes an example of computing various parameters by using Expressions 1 to 6 directly, the method of computing the various parameters is not limited to the above method. For example, tables corresponding to each of Expressions 1 to 6 may also be defined. For example, in the case of Expression 5, since $Q_0$ is computed on the basis of A, B, and D, $Q_0$ may also be computed by using a table defining a mapping relationship of A, B, and D versus $Q_0$. In this case, even if a corresponding numerical value is not directly available, a process such as interpolation may be performed. In any case, it is sufficient to compute the various parameters according to algorithms corresponding to Expressions 1 to 6.

<Power-saving timer control>

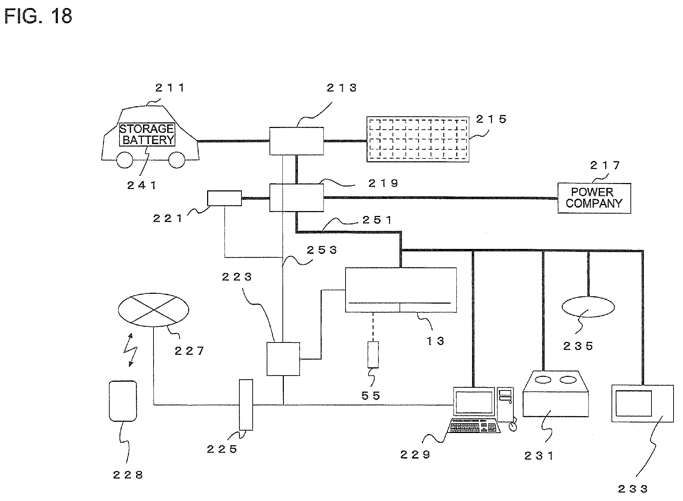

The power-saving timer control section 93 executes the power-saving timer control, and as illustrated in FIG. 5, is equipped with a fifth computational unit 141, a sixth computational unit 142, a seventh computational unit 143, and an eighth computational unit 144, for example. The fifth computational unit 141 computes occupancy information on the basis of a set value set by the user or an estimated value estimated from past information. The occupancy information includes, for example, the time when the user starts occupancy, the duration of continued occupancy by the user, and the time when the user is absent. In the case of the occupancy information being set by the user, the remote control 55 is used, for example. Note that the equipment by which the user sets the occupancy information is not limited to the remote control 55. For example, the measurement and control device 51 or the measurement and control device 53 illustrated in FIG. 1 is also acceptable. In addition, the HEMS controller 223, the communication device 228, or the terminal 229 discussed later with reference to FIG. 18 is also acceptable.

<Occupancy start time>

In addition, in the case of the occupancy information being set as an estimated value estimated from past information, occupancy information may be estimated by using past information from various equipment present in the indoor space 71, such as the remote control 55, for example, and the estimated occupancy information may be set. Specifically, for each of specific time periods, such as morning, midday, evening, and nighttime, the time at which the user first operates the remote control 55 is stored in the remote control 55 or the air-conditioning device 1. Next, the air-conditioning system collects the times at which the remote control 55 was used which are stored in this way, and on the basis of the collected results, estimates a time when the user starts occupancy, or, an occupancy start time, and sets the estimated occupancy start time. Note that in the case of obtaining multiple occupancy start times, the air-conditioning system may compute an average value, for example, and determine the average value to be the occupancy start time.

Additionally, the estimated value estimated from past information is not limited to an operation history such as the times when the remote control 55 was used as described above. For example, the air-conditioning system may also use the HEMS controller 223 to collect usage information about the terminal 229, an induction cooking heater 231, a range grill 233, lighting 235, or a television set (not illustrated) in the indoor space 71, that is to say, an operation history of various electric equipment discussed later with reference to FIG. 18, and compute occupancy information on the basis of the collected results.

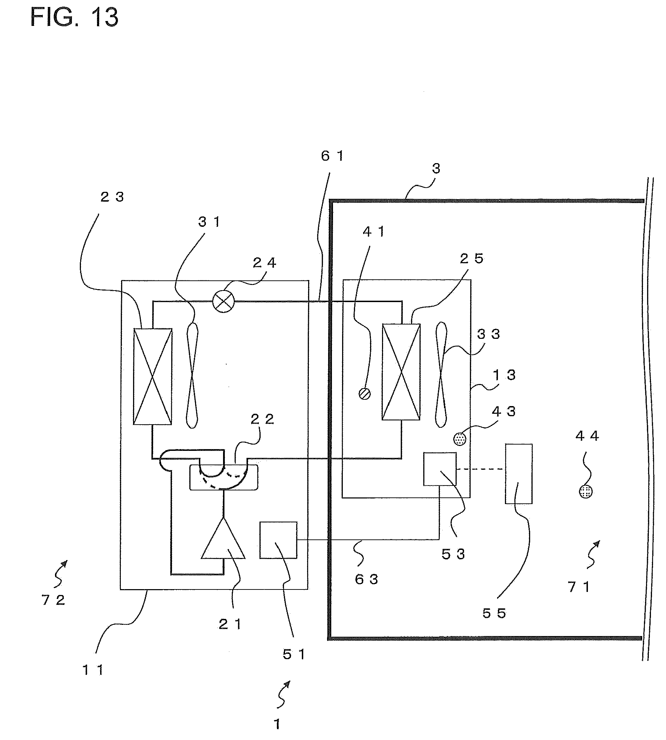

In addition, occupancy information may also be computed from an estimated value estimated from past information by analyzing power consumption amounts measured by a power meter 221 discussed later with reference to FIG. 18. Occupancy information may also be computed from an estimated value estimated from past information by utilizing detected results from an infrared sensor 43 or a presence sensor 44 discussed later with reference to FIG. 13. Occupancy information may also be computed from an estimated value estimated from past information by utilizing opening and closing information about indoor doors (not illustrated) installed in the indoor space 71 illustrated in FIG. 1. In addition, the user may also possess a communication device 228 discussed later with reference to FIG. 18, and in the case of supposing that a function of detecting the current location is installed in the communication device 228, location information about the user may be utilized to compute occupancy information. Also, if a camera is provided in a home intercom (not illustrated), imaging results from the camera may be used to sense the arrival of the user. Note that for the location information about the user, Wireless Fidelity (Wi-Fi™) connection availability information or Global Positioning System (GPS) location information may be used, for example.

Note that the air-conditioning device control module 90 corresponds to a controller according to the present invention. The air-conditioning device control module 90 may also supply control commands to the measurement and control device 51. The air-conditioning device control module 90 may also supply control commands to the measurement and control device 53. Additionally, the air-conditioning device control module 90 may also supply control commands to the driving equipment of the air-conditioning device 1, such as the compressor 21, the four-way valve 22, the expansion valve 24, the outdoor fan 31, and the indoor fan 33, for example, by going through the measurement and control device 51 and the measurement and control device 53. The air-conditioning device control module 90 may also supply control commands to the driving equipment of the air-conditioning device 1, such as the compressor 21, the four-way valve 22, the expansion valve 24, the outdoor fan 31, and the indoor fan 33, for example, without going through the measurement and control device 51 and the measurement and control device 53.

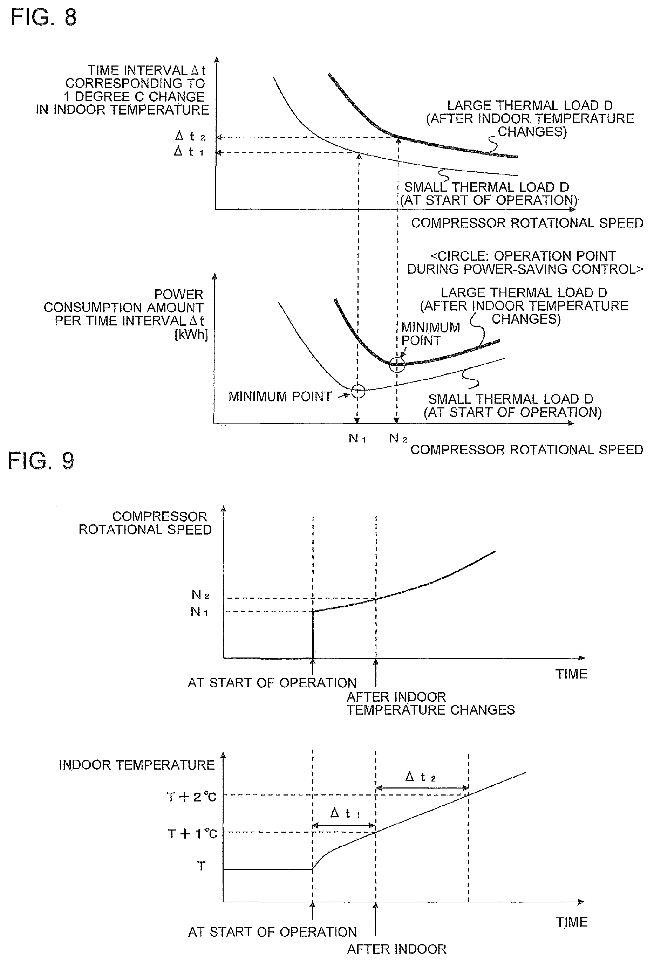

The sixth computational unit 142 computes the occupancy start time from the occupancy information, and supplies the computed occupancy start time to the seventh computational unit 143. The seventh computational unit 143 computes a pre-cooling or pre-heating start time on the basis of the occupancy start time and air-conditioning information, and supplies the computed pre-cooling or pre-heating start time to the eighth computational unit 144. The air-conditioning information is information related to the performance of the model of the air-conditioning device 1, for example. The seventh computational unit 143 computes a time interval $\Delta t$ corresponding to each set temperature from the air-conditioning information, and subtracts the total time of the time intervals $\Delta t$ from the occupancy start time to determine the pre-cooling or pre-heating start time. Note that the time interval $\Delta t$ will be described in detail using FIGS. 8 to 10 discussed later.

Note that the pre-cooling or pre-heating start time may also be downloaded to the HEMS controller 223 or other component via the public line 227 and the communication equipment 225 discussed later with reference to FIG. 18. Additionally, the pre-cooling or pre-heating start time may also be specified directly by the user.

When the pre-cooling or pre-heating start time arrives, the eighth computational unit 144 supplies power-saving control command to the power-saving control section 92.

Note that the operation of obtaining occupancy information on the basis of an estimated value estimated from past information is effective when the occupancy information is expected to be different from day to day.

In the power-saving control described above, the operating capacity of the air-conditioning device 1 is controlled to minimize the power consumption amount from the operation start time until the indoor temperature reaches the target temperature. In other words, the air-conditioning system executes power-saving control that greatly reduces the total power consumption amount from the start of operation by the air-conditioning device 1 until the indoor temperature reaches the target temperature. An issue to note when executing the power-saving control is that simply lowering the rotational speed of the compressor 21 compared to the normal control improves the operating efficiency COP, but lowers the capacity Q, thereby causing the indoor temperature to not reach the set temperature or increasing the time taken until the indoor temperature reaches the set temperature. Consequently, when executing the power-saving control, the air-conditioning system needs to control the rotational speed of the compressor 21 appropriately. Accordingly, the operating principles of such appropriate control are described hereinafter.

<Operating points of power-saving control>

As one technique of appropriately controlling the rotational speed of the compressor 21, an operating principle of greatly reducing the total power consumption from the start of operation by the air-conditioning device 1 until the indoor temperature reaches the target temperature will be described using FIGS. 8 to 10. FIG. 8 is a diagram illustrating an example of comparing the respective variations in a time interval $\Delta t$ corresponding to a 1 degree C change in indoor temperature and a power consumption amount per time interval $\Delta t$ that accompany variation in the compressor rotational speed between the time when operation is started and after the indoor temperature changes according to Embodiment 1 of the present invention. In FIG. 8, the unshaded circle is used to indicate operating points of the power-saving control.

As illustrated in FIG. 4, as the rotational speed of the compressor 21 falls, the capacity Q of the air-conditioning device 1 decreases. Thus, from Expression 3 described above, as the rotational speed of the compressor 21 falls, the time interval $\Delta t$ increases. Also, from Expression 3 above, at the rotational speed of the compressor 21 at which the capacity Q of the air-conditioning device 1 and the thermal load D become equal, the indoor temperature does not change, and thus the time interval $\Delta t$ becomes infinite.

In addition, generally, as the temperature difference between the outdoor temperature and the indoor temperature increases, the thermal load D increases. For example, if the outdoor temperature is 30 degrees C and the indoor temperature is 30 degrees C at the operation start time of the air-conditioning device 1, the temperature difference between the outdoor temperature and the indoor temperature is 0 degrees C. Also, if the outdoor temperature is 30 degrees C and the indoor temperature is 25 degrees C after operation of the air-conditioning device 1 starts and after the indoor temperature changes, the temperature difference between the outdoor temperature and the indoor temperature is 5 degrees C. Thus, the thermal load D is increased after the indoor temperature changes compared to the operation start time. Consequently, for the time interval At, $\Delta t_2$ after the indoor temperature changes is lengthened compared to $\Delta t_1$ at the operation start time.

In addition, as illustrated in FIG. 8, a minimum point exists for the power consumption amount per time interval $\Delta t$. If the compressor rotational speed is increased from the minimum point, the input W increases and the operating efficiency COP falls, and thus the power consumption amount increases. Also, if the compressor rotational speed is decreased from the minimum point, the time interval $\Delta t$ extends, and thus the power consumption amount increases.

Since the thermal load D is increased after the indoor temperature changes compared to the operation start time, in Expression 5, the capacity $Q_0$ at the minimum point of the power consumption amount increases, and thus the compressor rotational speed corresponding to the minimum point of the power consumption amount increases from $N_1$ to $N_2$ as illustrated in FIG. 8.

At this point, A and B of the operating efficiency COP characteristics in Expression 5 described above will be described from the perspective of the operating efficiency COP. As illustrated in FIG. 4, the slope of the operating efficiency COP(-A) is decreased and more gradual after the indoor temperature changes compared to the operation start time. As the compressor rotational speed falls, the refrigerant saturation temperature of the indoor heat exchanger 25 approaches the indoor temperature, and is more strongly affected by changes in the indoor temperature. Thus, the COP drop after the indoor temperature changes becomes significant to the extent that the compressor rotational speed is low.

Since the slope (-A) is decreased after the indoor temperature changes, B/(-A) tends to increase. Thus, in Expression 5 described above, the capacity $Q_0$ at the minimum point of the power consumption amount is increased after the indoor temperature changes compared to the operation start time. Thus, it is desirable to increase the operating capacity of the compressor 21, or in other words the compressor rotational speed, together with changes in the indoor temperature.

In the power-saving control, the optimal compressor rotational speed N may be controlled by commands, or the set temperature may be controlled by commands for each time interval $\Delta t$. Note that although sensible heat and latent heat are included in the cooling capacity Q or the heating capacity Q, since the sensible heat capacity affects the changes in the indoor temperature, the cooling capacity Q or the heating capacity Q may also be treated as the capacity Q of just the sensible heat portion.

From the above description, if the rotational speed of the compressor 21 at which the power consumption amount is minimized and the time interval $\Delta t$ corresponding to a 1 degree C change in the indoor temperature are associated via the thermal load D, if the set temperature is set with a step size of 1 degree C, and if the set temperature is changed in a stepwise manner with the set temperature and the rotational speed of the compressor 21 at which the power consumption amount is minimized in an associated state, the power consumption amount consumed by the compressor 21 during the time interval $\Delta t$ is minimized. Thus, it is possible to greatly reduce the total power consumption amount from the start of operation by the air-conditioning device 1 until the indoor temperature reaches the target temperature. Consequently, the air-conditioning system is able to increase the operating efficiency of the air-conditioning device 1 and thereby carry out the energy-efficient operation with low power consumption.

<Power-saving control: compressor rotational speed control>

FIG. 9 is a diagram illustrating an example of change over time in indoor temperature in the case of the air-conditioning device 1 performing the power-saving control with a compressor rotational speed command according to Embodiment 1 of the present invention. FIG. 9 illustrates an example of the case of heating operation. As illustrated in FIG. 9, if the air-conditioning system controls the compressor rotational speed from $N_1$ to $N_2$ from the operation start time until after the indoor temperature changes, the indoor temperature changes on a 1 degree C temperature gradient in each of both the time interval $\Delta t_1$ and the time interval $\Delta t_2$. Thus, by specifying an optimal compressor rotational speed N, power-saving control is executed.

<Power-saving control: set temperature control>

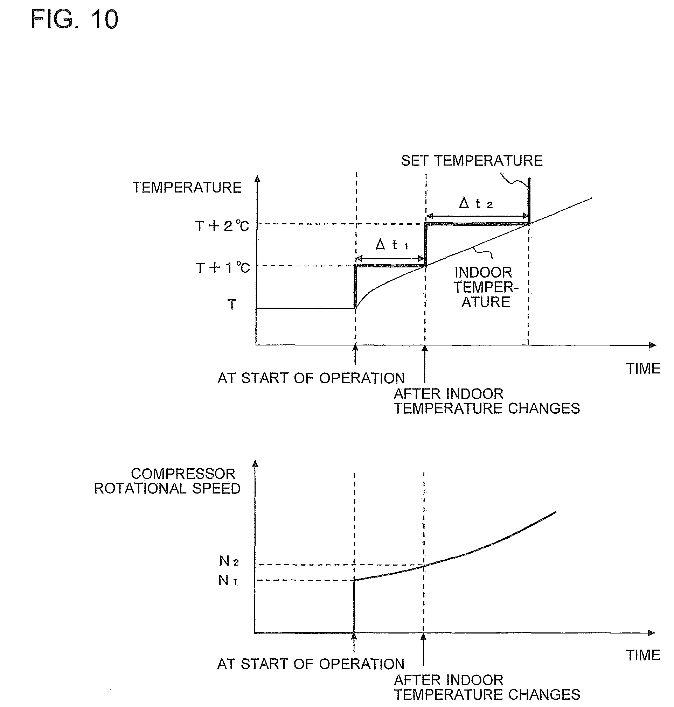

FIG. 10 is a diagram illustrating an example of change over time in compressor rotational speed in the case of the air-conditioning device 1 performing the power-saving control with a set temperature command according to Embodiment 1 of the present invention. FIG. 10 illustrates an example of the case of heating operation. As illustrated in FIG. 10, the air-conditioning system sets the set temperature to the indoor temperature plus 1 degree C at the start of operation, and increases the set temperature by 1 degree C after the time interval $\Delta t_1$ elapses. Subsequently, after the indoor temperature changes, the air-conditioning system increases the set temperature by 1 degree C after the time interval $\Delta t_2$ elapses. At this point, if the air-conditioning system controls the compressor rotational speed according to the temperature difference between the set temperature and the indoor temperature similarly to the normal control, the compressor rotational speed is controlled from $N_1$ to a rotational speed close to $N_2$ accordingly.

Note that although the above describes an example in which the time interval $\Delta t$ corresponding to a 1 degree C change in the indoor temperature and the compressor rotational speed at which the power consumption amount of the compressor 21 is minimized are associated, the configuration is not particularly limited to the above. For example, the time interval $\Delta t$ corresponding to a 0. 1 degrees C change in the indoor temperature and the compressor rotational speed at which the power consumption amount of the compressor 21 is minimized may be associated. As another example, the time interval $\Delta t$ corresponding to a 1.75 degrees C change in the indoor temperature and the compressor rotational speed at which the power consumption amount of the compressor 21 is minimized may be associated. In short, it is sufficient for the time interval $\Delta t$ corresponding to a change in the indoor temperature and the compressor rotational speed at which the power consumption amount of the compressor 21 is minimized to be associated.

<Operation of power-saving control>

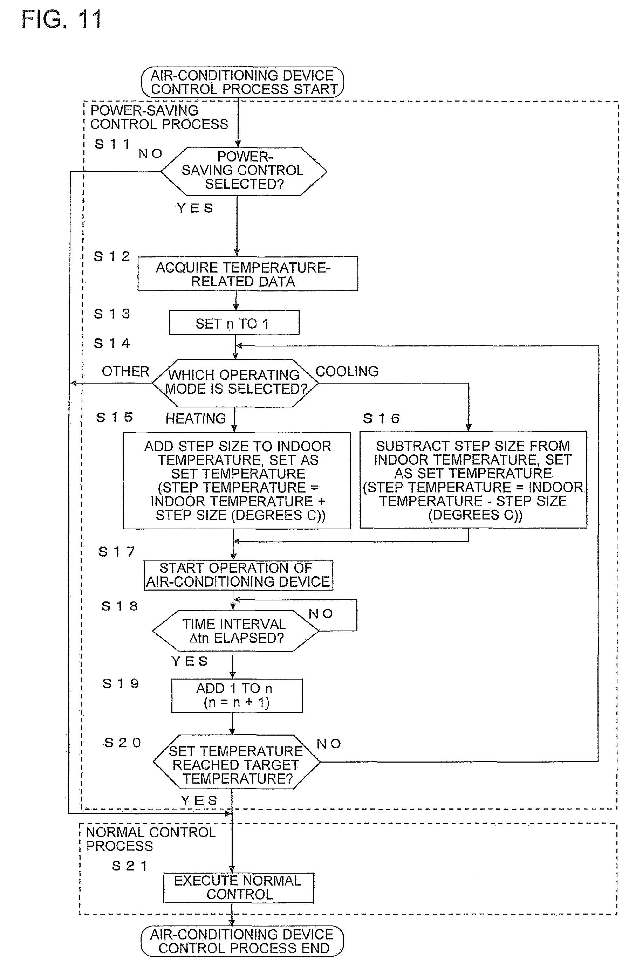

Next, the operation of performing the power-saving control on the basis of the operating principles described above will be described using FIG. 11. FIG. 11 is a flowchart illustrating an example of power-saving control process as part of a control example of the air-conditioning system according to Embodiment 1 of the present invention.

Note that the processing from step S11 to step S20 corresponds to the power-saving control process described above, while the processing in step S21 corresponds to the normal control process described above.

(Step S11)

The air-conditioning system determines whether or not the power-saving control is selected. If the power-saving control is selected, the air-conditioning system proceeds to step S12. On the other hand, if the power-saving control is not selected, the air-conditioning system proceeds to step S21.

(Step S12)

The air-conditioning system acquires data related to the temperature. For example, the air-conditioning system acquires air-conditioning information, such as the indoor temperature, the outdoor temperature, the target temperature, and the occupancy start temperature. Additionally, the air-conditioning system acquires the step size of the set temperature as air-conditioning information.

(Step S13)

The air-conditioning system sets n to 1. Herein, n is a subscript used to refer to a relevant time interval $\Delta t$ from among multiple time intervals $\Delta t$. Thus, n may be set to a value other than 1. In short, it is sufficient for n to enable to refer to a relevant time interval $\Delta t$ from among multiple time intervals $\Delta t$.

(Step S14)

The air-conditioning system determines which operating mode is selected. If the operating mode is heating, the air-conditioning system proceeds to step S15. If the operating mode is cooling, the air-conditioning system proceeds to step S16. If the operating mode is other than the above, the air-conditioning system proceeds to step S21.

(Step S15)

The air-conditioning system adds the step size to the indoor temperature, and treats the result as the set temperature. For example, if the step size of the set temperature is 1 degree C, the air-conditioning system sets (set temperature = indoor temperature + step size (degree C) = indoor temperature + 1 degree C).

(Step S16)

The air-conditioning system subtracts the step size from the indoor temperature, and treats the result as the set temperature. For example, if the step size of the set temperature is 1 degree C, the air-conditioning system sets (set temperature = indoor temperature - step size (degree C) = indoor temperature - 1 degree C).

(Step S17)

The air-conditioning system starts operation of the air-conditioning device 1.

(Step S18)

The air-conditioning system determines whether or not the time interval $\Delta t_n$ has elapsed. If the time interval $\Delta t_n$ has elapsed, the air-conditioning system proceeds to step S19. On the other hand, if the time interval $\Delta t_n$ has not elapsed, the air-conditioning system returns to step S18.

(Step S19)

The air-conditioning system adds 1 to n. For example, the air-conditioning system sets n=n+1 to advance n by +1.

(Step S20)

The air-conditioning system determines whether or not the set temperature has reached the target temperature. If the set temperature has reached the target temperature, the air-conditioning system proceeds to step S21. On the other hand, if the set temperature has not reached the target temperature, the air-conditioning system returns to step S14.

(Step S21)

The air-conditioning system executes the normal control, and ends the process. Note that, as described above, the normal control is proportional control, integral control, differential control, or combination of these controls.
As a result of the above, when the time interval $\Delta t$ elapses, the air-conditioning system conducts a process of raising the set temperature by 1 degree C in the case of heating, or lower the set temperature by 1 degree C in the case of cooling. In other words, the air-conditioning system changes the set temperature for every time interval $\Delta t$ until the set temperature reaches the target temperature. Note that the step size of the set temperature is not limited to 1 degree C, and may be a value smaller than 1 degree C, or a value larger than 1 degree C. Also, in step S20, instead of determining whether or not the set temperature has reached the target temperature, the air-conditioning system may determine whether or not the current time has reached a specified time, such as the occupancy start time.

<Operation of power-saving timer control>

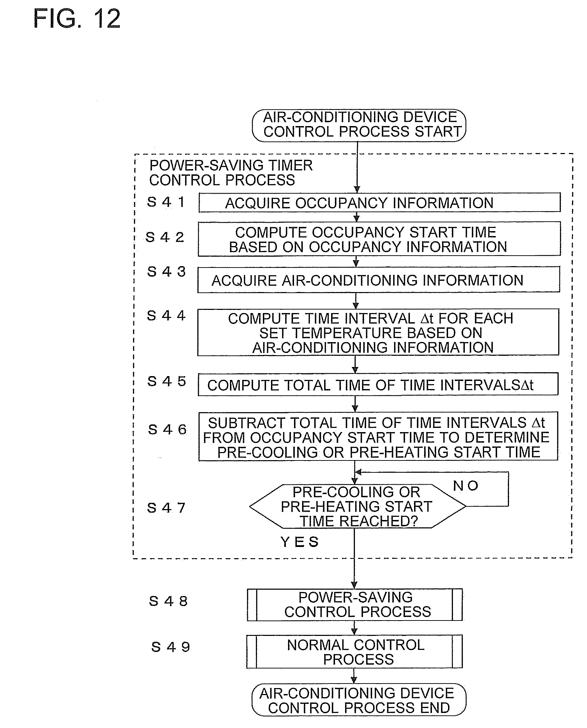

Next, an example of controlling the timing at which to execute the power-saving control will be described using FIG. 12. FIG. 12 is a flowchart illustrating an example of power-saving timer control process as part of a control example of an air-conditioning system according to Embodiment 1 of the present invention.
Note that the processing from step S41 to step S47 corresponds to the power-saving timer control process, the processing in step S48 corresponds to the power-saving control process described above, and the process in step S49 corresponds to the normal control process described above.

(Step S41)

The air-conditioning system acquires occupancy information.

(Step S42)

The air-conditioning system computes an occupancy start time on the basis of the occupancy information.

(Step S43)

The air-conditioning system acquires air-conditioning information.

(Step S44)

The air-conditioning system computes a time interval Δt for each set temperature on the basis of the air-conditioning temperature.

(Step S45)

The air-conditioning system computes the total time of the time intervals Δt.

(Step S46)

The air-conditioning system subtracts the total time of the time intervals Δt from the occupancy start time to determine a pre-cooling or pre-heating start time.

(Step S47)

The air-conditioning system determines whether or not the pre-cooling or pre-heating start time has been reached. If the pre-cooling or pre-heating start time has been reached, the air-conditioning system proceeds to step S48. On the other hand, if the pre-cooling or pre-heating start time has not been reached, the air-conditioning system returns to step S47.

(Step S48)

The air-conditioning system executes the power-saving control process. Specifically, the process from step S11 to step S20 described above is executed.

(Step S49)

The air-conditioning system executes the normal control process. Specifically, the process of step S21 described above is executed, and the process ends.

<Use of infrared sensor>

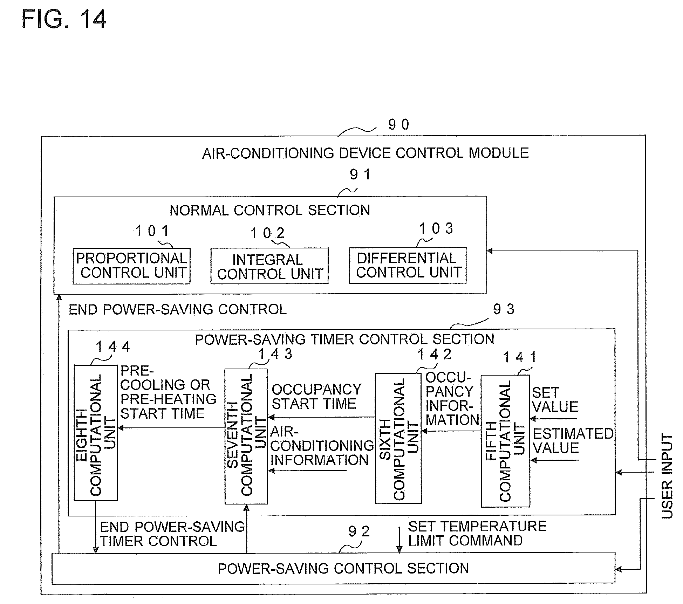

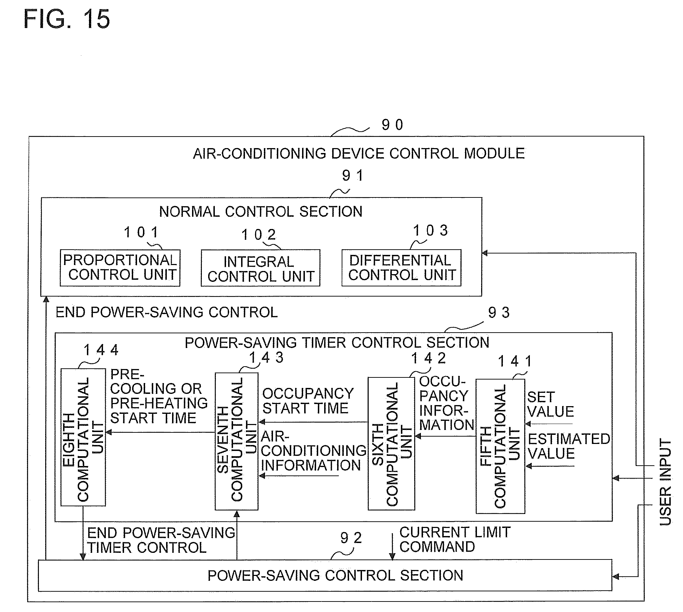

Next, an example of adding various sensors to the air-conditioning device 1 described in FIG. 1 will be described using FIG. 13. FIG. 13 is a diagram illustrating another example of a schematic configuration of an air-conditioning device 1 according to Embodiment 1 of the present invention. As illustrated in FIG. 13, an infrared sensor 43 is provided in the indoor unit 13, and a presence sensor 44 is provided in the indoor space 71. The infrared sensor 43 detects the radiation energy of objects, such as the radiation temperature. Thus, the infrared sensor 43 is able to sense the temperature of bodies present in the indoor space 71. Consequently, the detection results from the infrared sensor 43 may be used for the indoor temperature, which is one of the various parameters used in the control of the air-conditioning device 1. Note that the infrared sensor 43 corresponds to a first sensor according to an embodiment of the present invention.
In addition, similarly to the infrared sensor 43, the presence sensor 44 senses the presence or absence of people in the indoor space 71 to be controlled by detecting the radiation energy of objects, such as the radiation temperature. For example, the presence sensor 44 may be configured to sense infrared, sense ultrasound, or sense visible light, depending on the tuning or configuration. Consequently, the detection results from the presence sensor 44 may be used as one of the various parameters used in the control of the air-conditioning device 1. Note that the presence sensor 44 corresponds to a second sensor according to an embodiment of the present invention.
Next, an example of conducting operation while limiting various parameters will be described using FIGS. 14 and 15. FIG. 14 is a diagram illustrating an example of function blocks of an air-conditioning device control module 90 that controls an air-conditioning device 1 by limiting the set temperature according to Embodiment 1 of the present invention. FIG. 15 is a diagram illustrating an example of function blocks of an air-conditioning device control module 90 that controls an air-conditioning device 1 by limiting the current according to Embodiment 1 of the present invention.

<Limiting set temperature>

The configuration illustrated in FIG. 14 differs from the air-conditioning device control module 90 illustrated in FIG. 5 in that a temperature range correction table is added, for example, and a set temperature limit command is supplied to the power-saving control section 92. The temperature range correction table associates ranges of the set temperature with limited target temperatures. When a set temperature limit command is supplied, the power-saving control section 92 refers to the temperature range correction table and imposes a limit on the target temperature corresponding to the set temperature.

For example, suppose that a set temperature limit command is supplied to the power-saving control section 92. In this case, during the power-saving control, the upper limit or lower limit of the target temperature may be restricted to a narrow range compared to the operable range of the remote control 55. For example, if the power-saving control is being executed in the cooling operation, the target temperature of the power-saving control is limited to being from 25 degrees C to 28 degrees C, even though the selectable range of the set temperature on the remote control 55 is from 16 degrees C to 30 degrees C. As another example, if the power-saving control is being executed in the heating operation, the target temperature of the power-saving control is limited to being from 19 degrees C to 22 degrees C, even though the selectable range of the set temperature on the remote control 55 is from 16 degrees C to 30 degrees C.

<Limiting current>

The configuration illustrated in FIG. 15 differs from the air-conditioning device control module 90 illustrated in FIG. 5 in that a used current range correction table is added, for example, and a current limit command is supplied to the power-saving control section 92. The used current range correction table associates ranges of the used current with a limited range of the used current. When a current limit command is supplied, the power-saving control section 92 refers to the used current range correction table and imposes a limit on the used current.

For example, suppose that a current limit command is supplied to the power-saving control section 92. In this case, when performing the power-saving control, current limit values may be divided into several levels and configured. As another example, a current limit value may be set when a setting for a power-saving mode is configured in the air-conditioning device 1 or the HEMS controller 223 (discussed later), and a current limit command is supplied to the fourth computational unit 119.

For example, in a breakdown of power consumption by the air-conditioning device 1, the compressor 21 occupies approximately 80% to 90%, the indoor fan 33 occupies approximately 5% to 10%, and the outdoor fan 31 occupies approximately 5% to 10%. Thus, in the case of limiting the current of the air-conditioning device 1, the air-conditioning system must decrease the operating capacity by lowering the rotational speed of the compressor 21, and/or decrease the air flow rate by lowering the rotational speed of the indoor fan 33 or the outdoor fan 31.

To limit the current, the current limit value may be set to a relative value (%), such as a current limit value of 70% compared to 100% when current is not limited, or an absolute value specifically may be set, such as a current limit value of 3 A (amperes).

For example, suppose that a setting for a power-saving mode is configured in the air-conditioning device 1 or the HEMS controller 223 (discussed later). In this case, if the current limit value is 70%, for example, the air-conditioning system may limit the upper-limit rotational speed of the compressor 21 to 70% of the maximum rotational speed, and/or limit the rotational speed of the indoor fan 33 or the outdoor fan 31 to 70% of the maximum rotational speed.

As another example, if the current limit value is 3 A, for example, and the operating current is 5 A when a current limit is not imposed, the air-conditioning system may limit the upper-limit rotational speed of the compressor 21 to 3/5 of the maximum rotational speed, and/or limit the rotational speed of the indoor fan 33 or the outdoor fan 31 to 3/5 of the maximum rotational speed. Note that generally, the operating current when a current limit is not imposed is clearly indicated for each model.

The above description thus describes a case in which the standard of reference when a current limit is not imposed (100%) is the maximum value of the compressor rotational speed or the maximum value of the fan rotational speed, but the configuration is not particularly limited to the above. For example, a limit may also be set based on the compressor rotational speed or the fan rotational speed during normal operation by the normal control. For example, if the compressor rotational speed is 50 rps (rotations per second) in the normal control when a current limit is not imposed, the compressor rotational speed may be set to 35 rps in the case of a current limit value of 70%. Also, if the rotational speed of the indoor fan 33 is 1000 rpm (rotations per minute) at the high setting in the normal control when a current limit is not imposed, the fan rotational speed may be set to 700 rpm in the case of a current limit of 70%.

<Notification of automatic operation>

Next, an example of seeking external permission when performing the power-saving control on a time limit will be described using FIG. 16. FIG. 16 is a diagram illustrating an example of function blocks of an air-conditioning device control module 90 that controls an air-conditioning device 1 by executing power-saving timer control permission determination according to Embodiment 1 of the present invention. The configuration illustrated in FIG. 16 differs from the air-conditioning device control module 90 illustrated in FIG. 5 in that a permission determination request or operation start notification is supplied externally from the eighth computational unit 144 of the power-saving timer control section 93.

For example, suppose a case in which a permission determination request for power-saving timer control is transmitted to the user, or in which an operation start notification of power-saving timer control is transmitted to the user. For example, the air-conditioning system sends, via the public line 227 discussed later a permission determination request to communication device 228 (discussed later) such as a mobile phone, a smartphone, a personal computer, or a car navigation system possessed by the user, and requests the user to press an operation start permission button, or sends a message such as email to notify the user of the start of operation.

<When user does not come home>

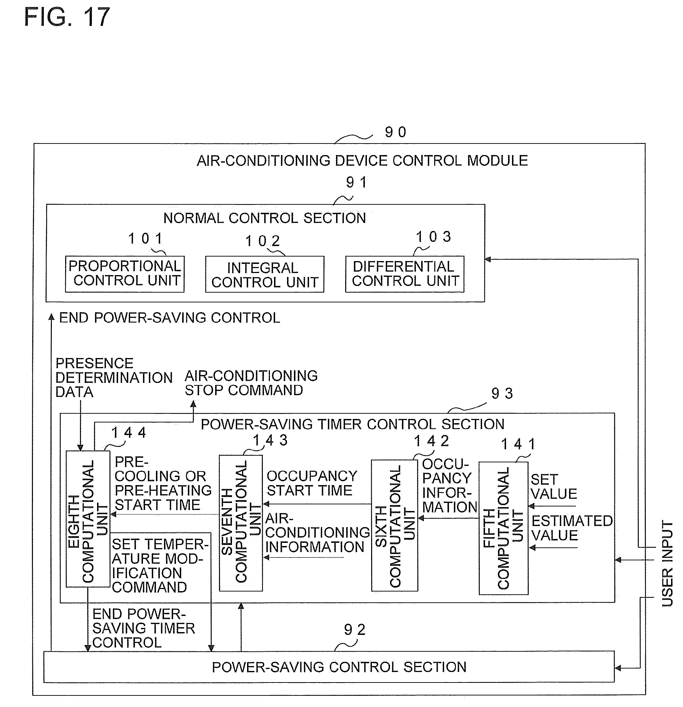

Next, an example of changing the control content according to a human presence determination result when performing the power-saving control on a time limit will be described using FIG. 17. FIG. 17 is a diagram illustrating an example of function blocks of the air-conditioning device control module 90 that controls the air-conditioning device 1 based on a determination of human presence in the indoor space 71 according to Embodiment 1 of the present invention. The configuration illustrated in FIG. 17 differs from the air-conditioning device control module 90 illustrated in FIG. 5 in that presence determination data, which is data related to the presence or absence of people, is supplied to the eighth computational unit 144 of the power-saving timer control section 93, an air-conditioning stop command is supplied from the eighth computational unit 144 of the power-saving timer control section 93 to the air-conditioning device 1, and a set temperature modification command is supplied from the eighth computational unit 144 of the power-saving timer control section 93 to the power-saving control section 92.

As illustrated in FIG. 17, suppose a case in which presence determination data is received during execution of the power-saving timer control, for example. For example, if user occupancy, or, the return home of the user, is not detected even after a preset time elapses after the power-saving timer control starts, the air-conditioning system may change the set temperature or stop the air-conditioning device 1.

At this point, a detection result from the infrared sensor 43 or the presence sensor 44 described earlier may be used to detect user occupancy. Also, an input operation of the remote control 55 may be used to detect user occupancy. Also, as described earlier, to detect user occupancy, an operation history of various electric equipment may be collected by the HEMS controller 223, and occupancy information may be computed on the basis of the collected results. In addition, factors such as the power consumption amount, opening and closing information about indoor doors (not illustrated), location information about the user, or an imaging result from a camera provided in a home intercom (not illustrated) may be used to detect user occupancy.

Also, when the set temperature is changed, the set temperature may be fixed to a specific temperature. Also, when the set temperature is changed, the set temperature may be set to a relative value relative to the original target temperature, such as a value 2 degrees C higher than the target temperature in the case of cooling, or a value 2 degrees C lower than the target temperature in the case of heating.

<Effects>

According to the above configuration, in the case of power-saving control, the air-conditioning system is able to change the set temperature in a stepwise manner while maintaining an association between the set temperature and the rotational speed of the compressor 21 at which the power consumption amount is minimized. Thus, the air-conditioning system reduces the power consumption amount used excessively. Consequently, the air-conditioning system is able to reduce the excessive amount of power consumed from the start of operation of the air-conditioning device 1 until the indoor temperature reaches the target temperature. As a result, the air-conditioning system is able to increase the operating efficiency of the air-conditioning device 1 and thereby carry out the energy-efficient operation with low power consumption.

In other words, the air-conditioning system determines the operating capacity of the air-conditioning device 1 according to the capacity Q of the air-conditioning device 1 and the operating efficiency COP characteristics of the air-conditioning device 1 from the start of operation by the air-conditioning device 1 until the indoor temperature reaches the target temperature. By determining the operating capacity of the air-conditioning device 1 in this way, the air-conditioning system is able to minimize the total power consumption until the indoor temperature reaches the target temperature, or, the power consumption amount.

For example, in the power-saving control, the air-conditioning system causes the compressor 21 to operate at a suitably low operating capacity, or in other words a suitably low rotational speed, to carry out highly efficient operation. On the other hand, in the normal control, when the temperature difference between the indoor temperature and the set temperature is large, the air-conditioning system operates to quickly eliminate the temperature difference. Thus, in the normal control the air-conditioning system increases the operating capacity of the compressor 21. Consequently, in the normal control, the air-conditioning system is able to speed up changes in the indoor temperature and keep user discomfort to a minimum, but by increasing the operating capacity by the same extent, the operating efficiency COP falls, and the power consumption amount of the air-conditioning device 1 increases. Accordingly, as described above, by avoiding such operation and reducing the operating capacity of the compressor 21 in the air-conditioning device 1, the air-conditioning system is able to increase the operating efficiency COP of the air-conditioning device 1 and perform the energy-efficient operation with low power consumption.

Specifically, when changing the set temperature every time interval $\Delta t$ to maintain operation at the minimum point of the power consumption amount, the air-conditioning system performs control to lengthen the time interval $\Delta t$ of the set temperature from the start of operation by the air-conditioning device 1 until after the indoor temperature changes. As a result, the air-conditioning system is able to reduce the operating capacity of the compressor 21 while also operating near the minimum point of the power consumption amount, and thereby carry out the energy-efficient operation.

For example, after cooling operation or heating operation starts, the indoor temperature changes over time, and thus the temperature difference between the indoor temperature and the outdoor temperature widens. As a result, the thermal load D increases, and thus for a fixed time interval $\Delta t$ of the set temperature, a temperature difference between the indoor temperature and the set temperature occurs more readily over time. Since the operating capacity of the compressor 21 is determined according to the temperature difference between the indoor temperature and the set temperature, as the temperature difference between the indoor temperature and the set temperature widens, the operating capacity of the compressor 21 increases. Thus, if the time interval $\Delta t$ of the set temperature is fixed, the compressor rotational speed shifts away from the operating point at the minimum point of the power consumption amount. Accordingly, as the temperature difference between the indoor temperature and the outdoor temperature widens over time, the air-conditioning system lengthens the time interval $\Delta t$, thereby maintaining the operating point at the minimum point of the power consumption amount, and carrying out the energy-efficient operation.

Furthermore, in the power-saving control, the air-conditioning system switches to the normal control once the set temperature reaches the target temperature. Thus, since the compressor rotational speed may be operated at respectively optimal operating points before and after the indoor temperature reaches the target temperature, the power consumption amount of the air-conditioning device 1 may be reduced. Also, since the power-saving control presupposes changing the indoor temperature, the air-conditioning system outputs a large capacity Q compared to the thermal load D, but in the case of keeping the indoor temperature constant, the air-conditioning system may be operated at a capacity Q equal to the thermal load D, thereby preventing excessive capacity by switching to the normal control.

Also, in the power-saving control, if the air-conditioning system performs an operation of switching to the normal control when a predetermined time is reached, the timing of the switch between the power-saving control and the normal control may be defined clearly.

In addition, in the case of the air-conditioning system performing a timer-scheduled operation that executes the power-saving control before a user-determined time, the cooling operation or the heating operation will be underway by the time the user enters the room of the house 3, thereby improving comfort when the user enters the room.

Additionally, when performing the power-saving control, the heat needed to cool a frame of the indoor space 71 down to the set temperature is large compared to the thermal load caused by heat penetration from the outside. Thus, to suitably carry out the power-saving control, it is important to determine whether or not the heat of the frame is being processed. For example, in the case of using the indoor temperature as the standard of determination, since the amount of heat is small compared to the frame, the response result of the air-conditioning device 1 appears quickly. Thus, there is concern that it is determined that the indoor space 71 has been cooled sufficiently, even if the frame is still at a high temperature. Accordingly, if the air-conditioning system detects the frame temperature using the infrared sensor 43 and performs the power-saving control so that the frame temperature becomes the set temperature, even more comfortable operation may be realized.

In addition, if a person unable to operate the remote control 55, such as a sleeping person or a small child, is present in the indoor space 71, and the timer operation works automatically, there is a risk of impairing health with heat or cold. Accordingly, if the air-conditioning system limits the range of the target temperature, such a situation may be avoided, while at the same time, over-cooling during cooling operation or over-heating during heating operation may be avoided, thereby improving energy efficiency.

In addition, if the air-conditioning system sets a current limit value, the user's intentions may be further reflected in the control, and power consumption may be reduced exactly as desired, thereby improving energy efficiency.

Also, with timer scheduling, the user is unable to check the status of the air-conditioning device 1 while away from home, but if the air-conditioning system performs an operation of seeking user confirmation before starting timer-scheduled operation, safety may be improved. Also, even if the user returns home at a time different from usual, if the air-conditioning system performs an operation of seeking user confirmation before starting timer-scheduled operation, operation may be avoided, thereby preventing the unwanted consumption of power and improving energy efficiency.

In addition, after starting the power-saving timer control, if user occupancy, or, the return home of the user, is not detected even after a predetermined time elapses, the air-conditioning system may change the set temperature or stop the air-conditioning device 1. Thus, even if the user's return home is delayed by a sudden errand, unwanted operation while the user is absent may be avoided, and the power consumption amount of the air-conditioning device 1 may be reduced.

Thus, in Embodiment 1, there is configured an air-conditioning system that controls an air-conditioning device 1 equipped with a compressor 21, the air-conditioning system including a controller that controls the air-conditioning device 1. The controller controls the air-conditioning device 1 by switching between normal control and power-saving control that reduces the power consumption amount compared to the normal control. In the case of the normal control, the controller controls the rotational speed of the compressor 21 according to the difference between an indoor temperature and a set temperature. In the case of the power-saving control, the controller changes the set temperature in a stepwise manner while maintaining an association between the set temperature and the rotational speed of the compressor 21 at which the power consumption amount corresponding to the set temperature is minimized.

With the above configuration, it is possible to change the set temperature in a stepwise manner while maintaining an association between the set temperature and the rotational speed of the compressor 21 at which the power consumption is minimized. Thus, the air-conditioning system reduces the power consumption amount used excessively. Consequently, the air-conditioning system is able to greatly reduce the total power consumption amount from the start of operation of the air-conditioning device 1 until the indoor temperature reaches the target temperature. As a result, the air-conditioning system is able to increase the operating efficiency of the air-conditioning device 1 and thereby carry out the energy-efficient operation with low power consumption.

Also, in Embodiment 1, in the case of the power-saving control, the controller sets a temperature step size, which is the amount by which to increase or decrease the set temperature, changes the set temperature in increments or decrements of the step size, sets a time interval $\Delta t$ corresponding to the step size per the thermal load corresponding to the step size, and sets the time interval $\Delta t$ to a large value in a stepwise manner while maintaining an association between the set temperature and the time interval $\Delta t$.

Also, in Embodiment 1, the thermal load increases as the temperature difference between the outdoor temperature and the indoor temperature increases, and the controller sets the time interval $\Delta t$ to a large value in a stepwise manner as the thermal load increases.

Also, in Embodiment 1, the controller sets a target temperature corresponding to the power-saving control, and when the set temperature reaches the target temperature during the operation of the air-conditioning device 1 under the power-saving control, the controller switches to the normal control.

Also, in Embodiment 1, a specified time at which to start the normal control is preset, and when the current time reaches the specified time during the operation of the air-conditioning device 1 under the power-saving control, the controller switches to the normal control.

Also, in Embodiment 1, if an occupancy start time at which to start occupying the space to be controlled by the air-conditioning device 1 is preset, the controller determines a pre-cooling or pre-heating start time at which to start pre-cooling or pre-heating on the basis of the occupancy start time and the total time of the time intervals $\Delta t$, and starts execution of the power-saving control at the pre-cooling or pre-heating start time.

Also, in Embodiment 1, if an infrared sensor 43 that detects the radiation energy of an object is provided, the controller computes the indoor temperature on the basis of a detection result from the infrared sensor 43.

Also, in Embodiment 1, the controller sets the set temperature to an integer value.

Also, in Embodiment 1, in the case of the power-saving control, the controller sets an upper limit value on the set temperature to a target upper limit value that is lowered compared to the upper limit on the set temperature, and sets a lower limit value on the set temperature to a target lower limit value that is raised compared to the lower limit value on the set temperature.

Also, in Embodiment 1, in the case of the power-saving control, the controller sets an upper limit value on the current supplied to the air-conditioning device 1 to a limited upper limit value that is lowered compared to the upper limit value on the current.

Also, in Embodiment 1, when starting the power-saving control, the controller transmits to the user of the air-conditioning device 1 an operation start notification that notifies the user of the start of operation, or a permission determination request seeking permission to start operation.

Also, in Embodiment 1, if a wait time from the start of the power-saving control until a preset time is preset, and a presence sensor 44 that detects the presence or absence of a person in the space to be controlled is provided, the controller, during execution of the power-saving control, changes the set temperature or stops the air-conditioning device 1 on the basis of a detection result from the presence sensor 44 and the wait time.

Also, in Embodiment 1, the controller determines the presence or absence of a person on the basis of occupancy information including determination information about the presence or absence of a person in the space to be controlled. The occupancy information includes a set value set by the user of the air-conditioning device 1 or an estimated value estimated from past information. The past information includes an operation history of the remote control 55 that transmits various commands to the air-conditioning device 1, a usage history of electric equipment, power information related to the power consumption amount, a detection result from the presence sensor 44, door opening and closing information, or location information about the user of the air-conditioning device 1.

From the above description, the air-conditioning system is able to particularly and significantly reduce the total power consumption amount from the start of operation of the air-conditioning device 1 until the indoor temperature reaches the target temperature. Consequently, the air-conditioning system is able to particularly and significantly increase the operating efficiency of the air-conditioning device 1 and thereby particularly and significantly carry out the energy-efficient operation with low power consumption.

Embodiment 2.

Embodiment 2 differs from Embodiment 1 in that an HEMS is a control target of the air-conditioning system. Specifically, in Embodiment 1, the air-conditioning device control module 90 treats the air-conditioning device 1 as a control target. Accordingly, in Embodiment 2, the air-conditioning device control module 90 treats an HEMS as a control target in addition to the air-conditioning device 1. Thus, in Embodiment 2, since control of the HEMS and control of the air-conditioning device control module 90 are conducted in conjunction with each other, the power consumption amount used excessively may be reduced further. First, the HEMS in Embodiment 2 will be described. FIG. 18 is a diagram illustrating an example of a schematic configuration of an HEMS, which is a control target of an air-conditioning system according to Embodiment 2 of the present invention.

<Configuration of HEMS>

As illustrated in FIG. 18, the HEMS is provided with electric equipment, which are home appliances in the house 3 illustrated in FIG. 1, such as the indoor unit 13 of the air-conditioning device 1, the terminal 229, the induction cooking heater 231, the range grill 233, and the lighting 235. In addition, the HEMS is provided with electric equipment on the outside of the house 3 illustrated in FIG. 1, such as an electric vehicle 211 equipped with a storage battery 241, a power conditioner 213, a photovoltaic array 215, a power distribution switch board 219, and a power meter 221. The pieces of electric equipment are connected by a power line 251. Also, among the electric equipment, the home appliances are driven by power supplied from a power company 217, power supplied from the photovoltaic array 215, or power supplied from the storage battery 241 onboard the electric vehicle 211, and the power consumption of the home appliances is measured by the power meter 221.

Among the electric equipment, the home appliances are connected to the HEMS controller 223 by a communication line 253, and thus the HEMS controller 223 is able to acquire operating information about the home appliances, and transmit control commands to the home appliances. For example, the HEMS controller 223 is able to send, to the air-conditioning device 1, instructions obtained by the user operating the remote control 55, such as an instruction to start operation of the air-conditioning device 1, an instruction to stop operation of the air-conditioning device 1, an instruction to change the operating mode of the air-conditioning device 1, such as the cooling, heating, fan-only operation, and dehumidifying operation, or an instruction to change the set temperature, air flow rate, and air flow direction of the air-conditioning device 1. As another example, the HEMS controller 223 transmits and receives various signals to and from the air-conditioning device control module 90 that controls the air-conditioning device 1. Thus, by executing various processes in conjunction with the air-conditioning device control module 90, the HEMS controller 223 is able to reduce excess power consumption.

In addition, the HEMS controller 223 is connected to the power conditioner 213 and the power meter 221 by the communication line 253, and thus is able to acquire power information about the power conditioner 213 and the power meter 221. Additionally, since the HEMS controller 223 is connected to the communication equipment 225, and the communication equipment 225 is connected to the public line 227, the HEMS controller 223 is able to externally transmit and receive various data. For example, the communication device 228 is able to communicate with the HEMS controller 223 via the public line 227. The communication device 228 is a device operated by the user, and may be a mobile phone, a smartphone, a tablet, a personal computer, or a car navigation system, for example.

The various communications conducted within the system configured by the HEMS may be wired or wireless, and the mode of communication is not particularly limited. Also, the configuration of the HEMS described above illustrates one example, and the configuration is not particularly limited to the above.

<Remote operation>

An example of executing the power-saving control of the air-conditioning device 1 by using the communication device 228 remotely will now be described. Suppose that the user possesses a communication device 228 such as a mobile phone, a smartphone, a tablet, a personal computer, or a car navigation system. Also, suppose that the communication device 228 existing either inside the house 3 or outside the house 3 transmits various data to the HEMS controller 223 via the public line 227.

In this case, the communication equipment 225 receives various data transmitted from the communication device 228, and supplies the received various data to the HEMS controller 223. In addition, when issuing a reply in response to the various data, the HEMS controller 223 replies to the communication device 228 via the communication equipment 225 as needed.

Thus, similarly to the case of the user directly operating the HEMS controller 223, it is possible to remotely acquire various information possessed by the HEMS controller 223, and remotely issue various operating commands. Consequently, it is possible to transmit operating commands from the communication device 228 to the home appliances, receive operation information about the home appliances with the communication device 228, and receive power information about the power conditioner 213 or the power meter 221 with the communication device 228.

For example, suppose that the communication device 228 is a smartphone. In this case, from the screen of the communication device 228, it is possible to issue an instruction to start operation of the air-conditioning device 1 or an instruction to stop operation of the air-conditioning device 1. In addition, from the screen of the communication device 228, it is possible to select an operating mode of the air-conditioning device 1, such as the cooling operation, the heating operation, the fan-only operation, or the dehumidifying operation. In addition, from the screen of the communication device 228, it is possible to send commands similar to the case of operating the remote control 55, such as changing the set temperature, the air flow rate, or the air flow direction of the air-conditioning device 1.

In addition, from the screen of the communication device 228, it is possible to check air-conditioning information about the air-conditioning device 1, such as whether the air-conditioning device 1 is currently operating or stopped, the operating mode such as cooling, heating, fan-only, and dehumidifying, and the set temperature, air flow rate, or air flow direction. In addition, from the screen of the communication device 228, it is possible to display and check air-conditioning information such as the intake air temperature measured by the air-conditioning device 1 (indoor temperature), the indoor humidity, or the outdoor temperature. For example, if the user checks the status of the air-conditioning device 1 and the result is that the air-conditioning device 1 is already running, the user may suppose that someone such as another family member is currently using the air-conditioning device 1 and stop remote operation, or if the user checks the air-conditioning information and the indoor temperature exceeds 30 degrees C, the user may determine to remotely turn on cooling.

In addition, if the HEMS configuration described above is presupposed, it is also possible to select the power-saving mode and activate the air-conditioning device 1 immediately from the communication device 228, change the occupancy start time (return home time) of the power-saving timer from the communication device 228, or specify the pre-cooling or pre-heating start time from the communication device 228.

In addition, if the HEMS configuration described above is presupposed, and the communication device 228 is equipped with GPS, the communication device 228 may also compare current location information to home location information, and automatically determine the pre-cooling or pre-heating start time. For example, supposing that the communication device 228 is a GPS-equipped car navigation system or mobile phone, when there is a run command from the communication device 228, the HEMS controller 223 does not perform the power-saving control immediately in the case of judging that the current location is 30 km away from home, and the estimated arrival time is more than an hour.

Specifically, the HEMS controller 223 does not immediately cause the air-conditioning device 1 to perform cooling under the power-saving control, but instead causes the air-conditioning device 1 to execute the power-saving control when the distance between the current location and the home comes within a predetermined distance, or when the estimated arrival time comes within a predetermined time. As another example, in the case in which the optimal pre-cooling or pre-heating time computed automatically by the air-conditioning device 1 from the target temperature, the indoor temperature, or the outdoor temperature is 20 minutes, the HEMS controller 223 causes the air-conditioning device 1 to start the power-saving control when the estimated arrival time becomes 20 minutes.

<Method of selecting air-conditioning device 1>

Note that in the case of supposing that there are multiple air-conditioning devices 1 in the HEMS, when an operating command for an air-conditioning device 1 is issued from the communication device 228, it may be necessary to select which air-conditioning device 1 to operate from among the multiple air-conditioning devices 1. For example, interface elements such as a button or selection screen for selecting an air-conditioning device 1 may be displayed in the operating control application of the communication device 228. In this case, an air-conditioning device 1 that has been selected may be stored, and during the next operation, the automatically stored air-conditioning device 1 may be operated automatically. Also, an air-conditioning device 1 to operate may be preregistered for each communication device 228. Also, information about combinations of a communication device 228 and an air-conditioning device 1 may be stored in the HEMS controller 223 or stored in the communication device 228.

In addition, if the HEMS controller 223 stores the user's daily lifestyle pattern after returning home, when there is an operating command from the communication device 228, the HEMS controller 223 may automatically select an air-conditioning device 1 according to the lifestyle pattern. For example, a lifestyle pattern may include cooking, dining, watching TV, taking a bath, sleeping, using a personal computer, or reading, and depending on the lifestyle pattern, an air-conditioning device 1 corresponding to the air-conditioning of each of the kitchen, dining room, living room, bathroom, bedroom, or study may be selected.

In addition, in the case of multiple users, if a lifestyle pattern is stored in the HEMS controller 223 for each user, the HEMS controller 223 may specify a user from identification information of the communication device 228, and control a relevant air-conditioning device 1 on the basis of the lifestyle pattern corresponding to the specified user.

In addition, to detect the user's return home with the HEMS controller 223, supposing that the communication device 228 is a mobile phone, the HEMS controller 223 may determine the user's return home by using various information from the mobile phone, such as Wi-Fi™ connection availability or GPS location information, and specify the user by identification of the mobile phone.

In addition, the HEMS controller 223 may also specify a user by performing face recognition with a camera of a home intercom (not illustrated). In addition, the HEMS controller 223, after detecting a user's return home, may analyze the lifestyle pattern from the power consumption of home appliances or analyze the lifestyle pattern from detection results of the presence sensor 44, and accumulate various information on a daily basis. Since the presence sensor 44 detects the radiation energy of objects, the presence sensor 44 may also analyze the lifestyle pattern according to the degree of detection of energy such as infrared, ultrasound, and visible light. Note that the sensor to use for the detection of energy such as infrared, ultrasound, and visible light is not required to be the presence sensor 44, and may be any sensor able to sense such energy. The installation location of such a sensor is also not particularly specified, and such a sensor may be installed in locations such as a wall of the house 3, the ceiling of the house 3, or the floor of the house 3.

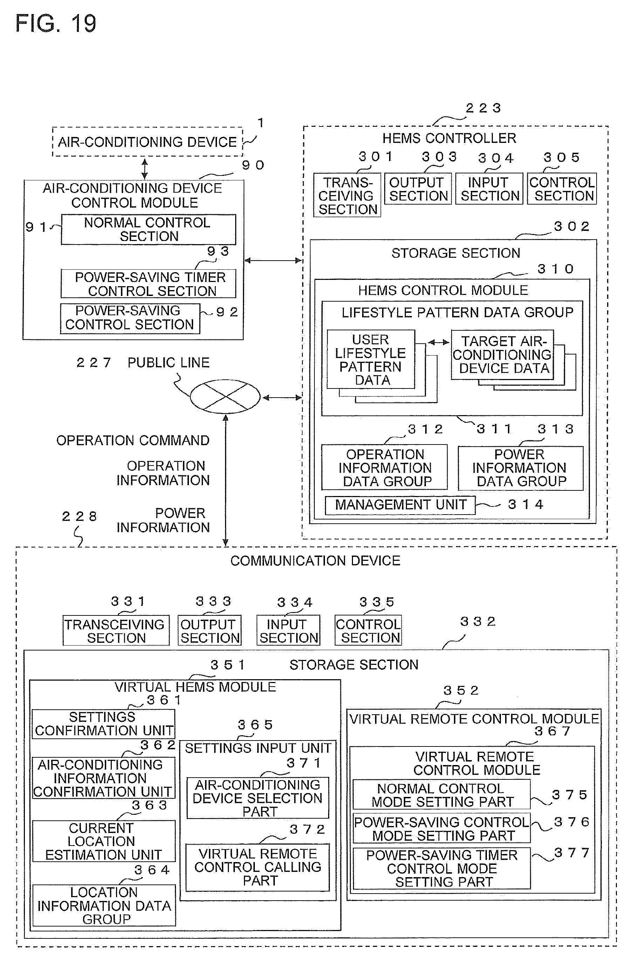

Next, to describe an example of the functional configuration of the air-conditioning system, an air-conditioning device control module 90, an HEMS control module 310, a virtual HEMS module 351, and a virtual remote control module 352 will be described using FIG. 19 as example function blocks of the air-conditioning system. FIG. 19 is a diagram illustrating an example of function blocks in each of an air-conditioning device control module 90 that controls an air-conditioning device 1, an HEMS controller 223, and a communication device 228 of a system according to Embodiment 2 of the present invention.

As illustrated in FIG. 19, a transceiving section 301, a storage section 302, an output section 303, an input section 304, and a control section 305 are provided as function blocks of the HEMS controller 223. The storage unit 302 is provided with an HEMS control module 310. The HEMS control module 310 is provided with a lifestyle pattern data group 311, an operation information data group 312, a power information data group 313, and a management unit 314. The lifestyle pattern data group 311 associates multiple pieces of user lifestyle pattern data with multiple pieces of target air-conditioning device data.

In addition, a transceiving section 331, a storage unit 332, an output section 333, an input section 334, and a control section 335 are provided as function blocks of the communication device 228. The storage section 332 is provided with the virtual HEMS module 351 and the virtual remote control module 352. The virtual HEMS module 351 is provided with a settings confirmation unit 361, an air-conditioning information confirmation unit 362, a current location estimation unit 363, a location information data group 364, and a settings input unit 365. The settings input unit 365 is provided with an air-conditioning device selection part 371 and a virtual remote control calling part 372. The virtual remote control module 352 is provided with an operating mode setting unit 367. The operating mode setting unit 367 is provided with a normal control mode setting part 375, a power-saving control mode setting part 376, and a power-saving timer control mode setting part 377.

Note that any of the air-conditioning device control module 90, the HEMS control module 310, the virtual HEMS module 351, and the virtual remote control module 352 corresponds to a controller according to the present invention. Additionally, all of the air-conditioning device control module 90, the HEMS control module 310, the virtual HEMS module 351, and the virtual remote control module 352 may correspond to a controller according to the present invention. In this case, the air-conditioning device control module 90, the HEMS control module 310, the virtual HEMS module, and the virtual remote control module 352 work in conjunction with each other to organically function as a single system.

Note that whereas Embodiment 1 describes an example of using the remote control 55 to select an operating mode such as the power-saving mode, transmit an operation start command, and perform timer scheduling, in Embodiment 2, components other than the remote control 55, such as the HEMS controller 223, the communication device 228, and the terminal 229, for example, may also perform similar operations. Also, various operations may be performed by any of the measurement and control device 51, the measurement and control device 53, the remote control 55, the HEMS controller 223, the communication device 228, and the terminal 229.

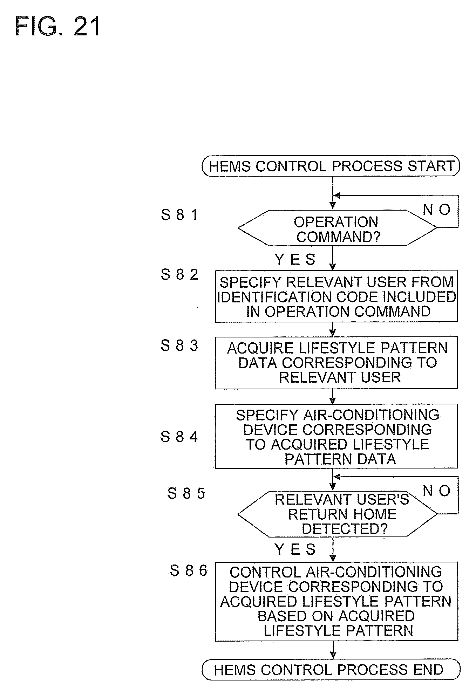

Next, an operation example of an air-conditioning system in the case in which the HEMS controller 223 is the primary agent of control will be described using each of FIGS. 20 and 21.

FIG. 20 is a flowchart illustrating an example of an HEMS control process executed on the basis of distance or an estimated arrival time as part of a control example of an air-conditioning system according to Embodiment 2 of the present invention.

(Step S61)

The air-conditioning system determines whether or not there is an operation command. If there is an operation command, the air-conditioning system proceeds to step S62. On the other hand, if there is no operation command, the air-conditioning system returns to step S61.

(Step S62)

The air-conditioning system reads various flags. For example, suppose that a distance flag prescribes whether or not to perform an operation of determining whether or not the distance between the transmission source of an operation command and the transmission destination of the operation command is within a threshold distance. In addition, suppose that a time flag prescribes whether or not to perform an operation of determining whether or not an estimated arrival time is within a threshold time.

(Step S63)

The air-conditioning system determines whether or not the distance flag is 1. If the distance flag is 1, the air-conditioning system proceeds to step S64. On the other hand, if the distance flag is not 1, the air-conditioning system proceeds to step S65.

(Step S64)

The air-conditioning system determines whether or not the distance between the transmission source of the operation command and the transmission destination of the operation command (that is, home) is within a threshold distance. If the distance between the transmission source of the operation command and the transmission destination of the operation command (that is, home) is within the threshold distance, the air-conditioning system proceeds to step S67. On the other hand, if the distance between the transmission source of the operation command and the transmission destination of the operation command (that is, home) is not within the threshold distance, the air-conditioning system ends the process.

(Step S65)

The air-conditioning system determines whether or not the time flag is 1. If the time flag is 1, the air-conditioning system proceeds to step S66. On the other hand, if the time flag is not 1, the air-conditioning system ends the process.

(Step S66)

The air-conditioning system determines whether or not the estimated arrival time is within the threshold time. If the estimated arrival time is within the threshold time, the air-conditioning system proceeds to step S67. On the other hand, if the estimated arrival time is not within the threshold time, the air-conditioning system ends the process.

(Step S67)

The air-conditioning system executes the power-saving control process, and ends the process. Note that the power-saving control process corresponds to the process from step S11 to step S20 described with reference to FIG. 11.
FIG. 21 is a flowchart illustrating an example of an HEMS control process executed on the basis of a lifestyle pattern as part of a control example of an air-conditioning system according to Embodiment 2 of the present invention.

(Step S81)

The air-conditioning system determines whether or not there is an operation command. If there is an operation command, the air-conditioning system proceeds to step S82. On the other hand, if there is no operation command, the air-conditioning system returns to step S81.

(Step S82)

The air-conditioning system specifies a relevant user from an identification code included in the operation command. For the identification code, supposing that the communication device 228 is a mobile phone, a unique ID stored in a subscriber identity module (SIM) card may be used, for example. However, the identification code is not particularly limited.

(Step S83)

The air-conditioning system acquires lifestyle pattern data corresponding to the relevant user.

(Step S84)

The air-conditioning system specifies an air-conditioning device 1 corresponding to the acquired lifestyle pattern data.

(Step S85)

The air-conditioning system determines whether or not the relevant user's return home is detected. If the relevant user's return home is detected, the air-conditioning system proceeds to step S86. On the other hand, if the relevant user's return home is not detected, the air-conditioning system returns to step S85.

(Step S86)

The air-conditioning system controls the air-conditioning device 1 corresponding to the acquired lifestyle pattern on the basis of the acquired lifestyle pattern, and ends the process.

Note that although the above describes an operation example of an air-conditioning system in the case in which the HEMS controller 223 is the primary agent of control, the primary agent of control is not particularly limited to the above. For example, any piece of equipment able to acquire the various data acquired by the HEMS controller 223 may also operate as the primary agent of control. For example, the indoor unit 13 may be the primary agent of control. As another example, the terminal 229 may be the primary agent of control. As another example, the communication device 228 may be the primary agent of control. In other words, the primary agent of control is not particularly limited.

<Effects>

From the above description, the HEMS, by performing the power-saving control of the air-conditioning device 1 while avoiding the time period when other home appliances are often used, is able to lower peaks in power consumption and level out the power consumption of the home as a whole, and thus contribute to energy savings to address the issue of society's insufficient electric power. In addition, the HEMS is also able to level out power and use power efficiently in the case in which electric power from the photovoltaic array 215 installed in the house 3 or the storage battery 241 is supplied to home appliances.

Additionally, in the HEMS, the HEMS controller 223 and the air-conditioning device control module 90 execute various processes in conjunction with each other. Also, in the HEMS, the HEMS controller 223, the air-conditioning device control module 90, the virtual HEMS module 351, and the virtual remote control module 352 execute various processes in conjunction with each other. Thus, the HEMS is able to decrease the power consumption of the home as a whole, and particularly decrease excessive power consumption amount of the air-conditioning device 1. Consequently, the HEMS is able to further decrease the power consumption of the system as a whole.

In addition, in the case of controlling the air-conditioning device 1 from an external control device such as the HEMS controller 223, control performed by issuing set temperature commands is easy compared to compressor rotational speed commands, and easy to apply to existing air-conditioning devices 1.

In addition, in the case of controlling the air-conditioning device 1 from an external control device such as the HEMS controller 223, there exist recommended standard interface specifications, such as ECHONET Lite (registered trademark), which enable common operations such as stopping, changing the operating mode, and changing the set temperature for an air-conditioning device 1 from any manufacturer. With such a standard interface, the set temperature may be changed with a step size of 1 degree C, and thus by setting the set temperature of power-saving control to an integer value, the power-saving control described above may be applied to an air-conditioning device 1 from any manufacturer, thereby improving versatility.

Additionally, since the air-conditioning device 1 may be operated remotely from the communication device 228, the user is able to start operation before returning home so that the room is at a comfortable temperature when the user returns home. Thus, comfort may be improved. Even if the user returns home at different times every day, operation may be started at an appropriate time, thereby improving convenience compared to scheduled operation from the remote control 55 provided in the house 3, while also avoiding wasted operation while the user is not at home, and thus reducing the power consumption amount.

In addition, if a person unaccustomed to operating the air-conditioning device 1 is present in the house 3, or in the case of going out while leaving a pet at home in the house 3, the user is able to perform remote operation and manage the indoor environment of the indoor space 71, thereby improving convenience. In addition, since the status of the air-conditioning device 1 or air-conditioning information is viewable from the communication device 228, the user is able to refer to such information as a standard by which to judge whether or not to perform remote operation, thereby improving convenience. In addition, since the start of pre-cooling control may be determined automatically from location information about the communication device 228, convenience is improved even further, while also avoiding wasted operation while the user is not at home, and thus reducing the power consumption amount.

In addition, when the HEMS is provided with multiple air-conditioning devices 1, an air-conditioning device 1 to operate may be selected freely from the communication device 228, thereby improving versatility. In addition, if an air-conditioning device 1 to operate is automatically determined from among multiple air-conditioning devices 1, the user does not have to make a selection every time the user operates an air-conditioning device 1, thereby improving convenience.

In addition, if the HEMS is provided with multiple air-conditioning devices 1, and an air-conditioning device 1 to operate is determined automatically from among the multiple air-conditioning devices 1 according to the user's lifestyle pattern after returning home, the user does not have to select an air-conditioning device 1, thereby improving convenience.

As above, in Embodiment 2, when multiple air-conditioning devices 1 are provided, the controller selects a relevant air-conditioning device 1 from among the multiple air-conditioning devices 1 on the basis of an operation history of the user of the air-conditioning device 1.

Also, in Embodiment 2, when multiple air-conditioning devices 1 are provided, the controller selects a relevant air-conditioning device 1 from among the multiple air-conditioning devices 1 on the basis of a lifestyle pattern of the user of the air-conditioning device 1.

According to the above configuration, convenience may be improved when using an air-conditioning device 1.

Embodiment 3.

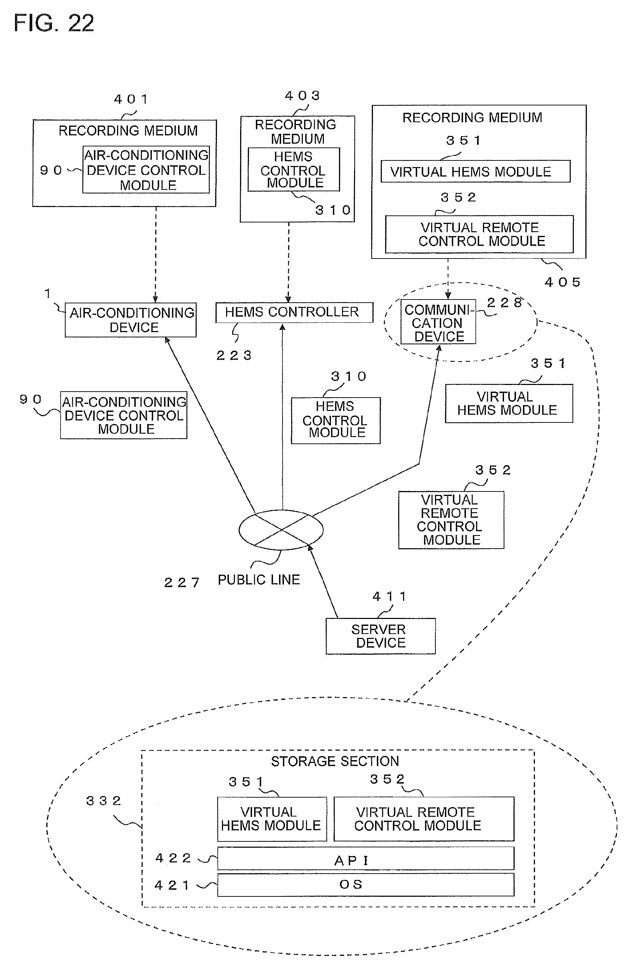

In Embodiment 1 and Embodiment 2, configuration examples and operation examples of an air-conditioning system are described. In Embodiment 3, an example implementation of an air-conditioning system will be described using FIG. 22.

FIG. 22 is a diagram illustrating an example of various control modules being installed onto various devices from recording media 401, 403, and 405 or a server device 411 according to Embodiment 3 of the present invention. As illustrated in FIG. 22, the air-conditioning device control module 90 is stored on a recording medium 401, the recording medium 401 is mounted in the air-conditioning device 1, and the air-conditioning device control module 90 is installed onto the air-conditioning device 1, thereby configuring a system that executes the various operations described in the foregoing.

Also, the HEMS control module 310 is stored on a recording medium 403, the recording medium 403 is mounted in the HEMS controller 223, and the HEMS control module 310 is installed onto the HEMS controller 223, thereby configuring a system that executes the various operations described in the foregoing.

Also, the virtual HEMS module 351 and the virtual remote control module 352 are stored on a recording medium 405, the recording medium 405 is mounted in the communication device 228, and the virtual HEMS module 351 and the virtual remote control module 352 are installed onto the communication device 228, thereby configuring a system that executes the various operations described in the foregoing.

In addition, suppose that a server device 411 is equipped with a disk device or other component, and the air-conditioning device control module 90, the HEMS control module 310, the virtual HEMS module 351, and the virtual remote control module 352 are stored in the disk device or other component. In this case, for example, the server device 411 modulates the air-conditioning device control module 90, the HEMS control module 310, the virtual HEMS module 351, and the virtual remote control module 352 onto a carrier wave and uploads to the air-conditioning device 1, the HEMS controller 223, and the communication device 228. The air-conditioning device 1, the HEMS controller 223, and the communication device 228 download and install the air-conditioning device 1, the HEMS controller 223, and the communication device 228 from the server device 411, thereby configuring a system that executes the various operations described above.

As another example, when focusing on the logical storage hierarchy of the storage section 332 of the communication device 228, after installing various modules, an operating system (OS) 421, an application interface (API) 422, the virtual HEMS module 351, and the virtual remote control module 352 are configured. In other words, in cases such as when the various functions described above are realized by the work of the OS 421 or realized by the cooperative work of the OS 421 and various applications, as described above, the portions other than the OS 421 may be stored on a medium and distributed, or downloaded.

Note that the recording media 401, 403, and 405 are non-transitory computer-readable recording media, such as removable media made up of magnetic disks (including flexible disks), optical discs including Compact Disc Read-Only Memory (CD-ROM) and Digital Versatile Disc (DVD), magneto-optical discs such as MO discs, and semiconductor memory, or hard disks.

<Effects>

From the above description, various modules may be installed from the recording media 401, 403, and 405 or the server device 411.

Thus, in Embodiment 3, in the case in which the various functions of the controller are stored on the recording media 401, 403, and 405, the various functions of the controller are implemented via the recording media 401, 403, and 405, and in the case in which the various functions of the controller are transferred over a communication medium, the various functions of the controller are implemented via the communication medium.

With the above configuration, various modules may be installed from the recording media 401, 403, and 405 or the server device 411. Reference Signs List

1: air-conditioning device 3: house 11: outdoor unit 13: indoor unit

21: compressor 22: four-way valve 23: outdoor heat exchanger 24: expansion valve 25: indoor heat exchanger 31: outdoor fan 33: indoor fan 41: indoor temperature sensor 43: infrared sensor44: presence sensor

51, 53: measurement and control device 55: remote control 61: refrigerant pipe 63: communication line 71: indoor space 72: outdoor space 90: air-conditioning device control module 91: normal control section

92: power-saving control section 93: power-saving timer control section 101: proportional control unit 102: integral control unit 103: differential control unit 111: first computational unit 113: second computational unit 115: third computational unit 119: fourth computational unit

121: set temperature control unit 141: fifth computational unit 142: sixth computational unit 143: seventh computational unit144: eighth computational unit 211: electric vehicle 213: power conditioner 215: photovoltaic array 217: power company 219: power distribution switch board

221: power meter 223: HEMS controller 225: communication equipment 227: public line 228: communication device 229: terminal

231: induction cooking heater 233: range grill 235: lighting 241: storage battery 301, 331: transceiving section 302, 332: storage section 303, 333: output section304, 334: input section 305, 335: control section 310: HEMS control module 311: lifestyle pattern data group 312: operation information data group 313: power information data group 314: management unit 351: virtual HEMS module 352: virtual remote control module 361: settings confirmation unit 362: air-conditioning information confirmation unit 363: current value estimation unit 364: location information data group 365: settings input unit 367: operating mode setting unit 371: air-conditioning device selection part 372: virtual remote control calling part 375: normal control mode setting part 376: power-saving control mode setting part 377: power-saving timer control mode setting part 401, 403, 405: recording media 411: server device 421: OS 422: API

## Claims

1. An air-conditioning system that controls an air-conditioning device equipped with a compressor, the air-conditioning system comprising:

   a controller configured to control the air-conditioning device, wherein
   the controller controls the air-conditioning device by switching between a normal control and a power-saving control that reduces a power consumption amount compared to the normal control,
   in the normal control, the controller controls a rotational speed of the compressor according to a difference between an indoor temperature and a set temperature, and
   in the power-saving control, the controller changes the set temperature in a stepwise manner while maintaining an association between the set temperature and the rotational speed of the compressor at which the power consumption amount corresponding to the set temperature is minimized.

2. The air-conditioning system of claim 1, wherein
   in the power-saving control, the controller
   sets a step size of temperature, the step size being an amount by which to increase or decrease the set temperature,
   changes the set temperature in increments or decrements of the step size,

sets a time interval corresponding to the step size for each of a thermal load corresponding to the step size, and sets the time interval to a large value in the stepwise manner while maintaining an association between the set temperature and the time interval.

3. The air-conditioning system of claim 2, wherein
the thermal load increases as a temperature difference between an outdoor temperature and the indoor temperature increases, and
the controller sets the time interval to a large value in the stepwise manner as the thermal load increases.

4. The air-conditioning system of claim 3, wherein
the controller sets a target temperature corresponding to the power-saving control, and when the set temperature reaches the target temperature during operation of the air-conditioning device under the power-saving control, the controller switches to the normal control.

5. The air-conditioning system of claim 3, wherein
a designated time at which to start the normal control is preset, and
when a current time reaches the designated time during operation of the air-conditioning device under the power-saving control, the controller switches to the normal control.

6. The air-conditioning system of claim 4 or 5, wherein
when an occupancy start time at which to start occupying a space to be controlled by the air-conditioning device is preset,
the controller
determines a pre-cooling or pre-heating start time at which to start pre-cooling or pre-heating, on a basis of the occupancy start time and a total time of the time intervals, and
starts execution of the power-saving control at the pre-cooling or pre-heating start time.

7. The air-conditioning system of any one of claims 1 to 6, further comprising
a first sensor configured to detect radiation energy from an object, wherein
the controller computes the indoor temperature on a basis of a detection result from the first sensor.

8. The air-conditioning system of any one of claims 1 to 7, wherein
the controller sets the set temperature to an integer value.

9. The air-conditioning system of any one of claims 1 to 8, wherein
in the power-saving control,
the controller
sets an upper limit value on the set temperature to a target upper limit value that is lowered compared to the upper limit value on the set temperature, and
sets a lower limit value on the set temperature to a target lower limit value that is raised compared to the lower limit value on the set temperature.

10. The air-conditioning system of any one of claims 1 to 9, wherein
in the power-saving control,
the controller sets an upper limit value on a current supplied to the air-conditioning device to a limited upper limit value that is lowered compared to the upper limit value on the current.

11. The air-conditioning system of any one of claims 1 to 10, wherein
when starting the power-saving control,
the controller transmits to a user of the air-conditioning device an operation start notification that notifies the user of the start of operation, or a permission determination request seeking permission to start operation.

12. The air-conditioning system of any one of claims 6 to 11, further comprising
a second sensor configured to detect presence or absence of a person in the space to be controlled, wherein
in a case where a wait time from the start of the power-saving control until a preset time is preset, the controller, during execution of the power-saving control, changes the set temperature or stops the air-conditioning device on a basis of a detection result from the second sensor and the wait time.

**13.** The air-conditioning system of claim 12, wherein
the controller determines presence or absence of a person on a basis of occupancy information including determination information about the presence or absence of a person in the space to be controlled,
the occupancy information includes a set value set by the user of the air-conditioning device or an estimated value estimated from past information, and
the past information includes an operation history of a remote control configured to transmit various commands to the air-conditioning device, a usage history of electric equipment, power information related to a power consumption amount, a detection result from the second sensor, door opening and closing information, or location information about the user of the air-conditioning device.

**14.** The air-conditioning system of any one of claims 1 to 13, further comprising
a plurality of the air-conditioning device, wherein
the controller selects a relevant air-conditioning device from among the plurality of the air-conditioning device on a basis of an operation history of the user of the air-conditioning device.

**15.** The air-conditioning system of any one of claims 1 to 13, further comprising
a plurality of the air-conditioning, wherein
the controller selects a relevant air-conditioning device from among the plurality of the air-conditioning device on a basis of a lifestyle pattern of the user of the air-conditioning device.

**16.** The air-conditioning system of any one of claims 1 to 15, wherein
in a case where various functions of the controller are stored on a recording medium, the various functions of the controller are implemented via the recording medium, and
in a case where the various functions of the controller are transferred over a communication medium, the various functions of the controller are implemented via the communication medium.

FIG. 1

FIG. 2

TEMPERATURE

[COMPRESSOR ROTATIONAL SPEED; FIXED]

OUTDOOR TEMPERATURE

INDOOR TEMPERATURE

SET TEMPERATURE ▶

EVAPORATING TEMPERATURE

TIME

AFTER INDOOR TEMPERATURE CHANGES

AT START OF OPERATION

FIG. 3

TEMPERATURE

[COMPRESSOR ROTATIONAL SPEED; FIXED]

CONDENSING TEMPERATURE

SET TEMPERATURE ▶

INDOOR TEMPERATURE

OUTDOOR TEMPERATURE

TIME

AFTER INDOOR TEMPERATURE CHANGES

AT START OF OPERATION

FIG. 4

CAPACITY Q
[kW]

AT START OF
OPERATION

AFTER INDOOR TEMPERATURE CHANGES

COMPRESSOR ROTATIONAL SPEED

INPUT W
[kW]

AFTER INDOOR
TEMPERATURE CHANGES

AT START OF OPERATION

COMPRESSOR ROTATIONAL SPEED

OPERATING
EFFICIENCY COP

AT START OF OPERATION

AFTER INDOOR TEMPERATURE CHANGES

COMPRESSOR ROTATIONAL SPEED

FIG. 5

FIG. 6

92

POWER-SAVING CONTROL SECTION

111

FIRST COMPUTA-
TIONAL UNIT
(MODEL CHARACTERISTICS)

SENSOR VALUES
(SUCH AS INDOOR TEMPERATURE,
OUTDOOR TEMPERATURE, INDOOR HUMIDITY)

A, B          113

SENSOR VALUES
(SUCH AS INDOOR TEMPERATURE,
OUTDOOR TEMPERATURE,
RADIATION TEMPERATURE)

SECOND COMPUTA-
TIONAL UNIT
(HOME CHARACTERISTICS)

D

THIRD COMPUTA-
TIONAL UNIT
(EXPRESSION 5)          115

CAPACITY $Q_0$

119

FOURTH COMPUTA-
TIONAL UNIT
(MODEL CHARACTERISTICS)

SENSOR VALUES
(SUCH AS INDOOR TEMPERATURE,
OUTDOOR TEMPERATURE, INDOOR HUMIDITY)

INDOOR AIR FLOW RATE SETTING

COMPRESSOR ROTATIONAL SPEED

# FIG. 7

**POWER-SAVING CONTROL SECTION** (92)

**FIRST COMPUTATIONAL UNIT (MODEL CHARACTERISTICS)** (111)

SENSOR VALUES (SUCH AS INDOOR TEMPERATURE, OUTDOOR TEMPERATURE, INDOOR HUMIDITY)

A, B

**SECOND COMPUTATIONAL UNIT (HOME CHARACTERISTICS)** (113)

SENSOR VALUES (SUCH AS INDOOR TEMPERATURE, OUTDOOR TEMPERATURE, RADIATION TEMPERATURE)

C, D

**THIRD COMPUTATIONAL UNIT (EXPRESSION 6)** (115)

TIME INTERVAL $\Delta t_o$

**SET TEMPERATURE CONTROL UNIT** (121)

SET TEMPERATURE

FIG. 8

FIG. 9

# FIG. 10

SET TEMPERATURE

TEMPERATURE

$T+2°C$

$\Delta t_2$

$\Delta t_1$

$T+1°C$

T

INDOOR
TEMPER-
ATURE

TIME

AT START OF OPERATION

AFTER INDOOR
TEMPERATURE CHANGES

COMPRESSOR
ROTATIONAL SPEED

$N_2$
$N_1$

TIME

AT START OF OPERATION

AFTER INDOOR
TEMPERATURE CHANGES

# FIG. 11

Flowchart:

AIR-CONDITIONING DEVICE CONTROL PROCESS START

POWER-SAVING CONTROL PROCESS

S11 — POWER-SAVING CONTROL SELECTED? — NO / YES

S12 — ACQUIRE TEMPERATURE-RELATED DATA

S13 — SET n TO 1

S14 — WHICH OPERATING MODE IS SELECTED? — OTHER / COOLING / HEATING

S15 — ADD STEP SIZE TO INDOOR TEMPERATURE, SET AS SET TEMPERATURE (STEP TEMPERATURE = INDOOR TEMPERATURE + STEP SIZE (DEGREES C))

S16 — SUBTRACT STEP SIZE FROM INDOOR TEMPERATURE, SET AS SET TEMPERATURE (STEP TEMPERATURE = INDOOR TEMPERATURE - STEP SIZE (DEGREES C))

S17 — START OPERATION OF AIR-CONDITIONING DEVICE

S18 — TIME INTERVAL $\Delta tn$ ELAPSED? — NO / YES

S19 — ADD 1 TO n (n = n + 1)

S20 — SET TEMPERATURE REACHED TARGET TEMPERATURE? — NO / YES

NORMAL CONTROL PROCESS

S21 — EXECUTE NORMAL CONTROL

AIR-CONDITIONING DEVICE CONTROL PROCESS END

# FIG. 12

```
                        ╭─────────────────────────────╮
                        │  AIR-CONDITIONING DEVICE     │
                        │  CONTROL PROCESS START       │
                        ╰─────────────────────────────╯
                                        │
  ┌─────────────────────────────────────┼─────────────────────────────────┐
  │ POWER-SAVING TIMER                  │                                  │
  │ CONTROL PROCESS                     ▼                                  │
  │ S 4 1   ┌─────────────────────────────────────────────────┐          │
  │         │   ACQUIRE OCCUPANCY INFORMATION                  │          │
  │         └─────────────────────────────────────────────────┘          │
  │                                     ▼                                  │
  │ S 4 2   ┌─────────────────────────────────────────────────┐          │
  │         │   COMPUTE OCCUPANCY START TIME                   │          │
  │         │   BASED ON OCCUPANCY INFORMATION                 │          │
  │         └─────────────────────────────────────────────────┘          │
  │                                     ▼                                  │
  │ S 4 3   ┌─────────────────────────────────────────────────┐          │
  │         │   ACQUIRE AIR-CONDITIONING INFORMATION           │          │
  │         └─────────────────────────────────────────────────┘          │
  │                                     ▼                                  │
  │ S 4 4   ┌─────────────────────────────────────────────────┐          │
  │         │   COMPUTE TIME INTERVAL Δt FOR EACH              │          │
  │         │   SET TEMPERATURE BASED ON                       │          │
  │         │   AIR-CONDITIONING INFORMATION                   │          │
  │         └─────────────────────────────────────────────────┘          │
  │                                     ▼                                  │
  │ S 4 5   ┌─────────────────────────────────────────────────┐          │
  │         │   COMPUTE TOTAL TIME OF TIME INTERVALSΔt         │          │
  │         └─────────────────────────────────────────────────┘          │
  │                                     ▼                                  │
  │ S 4 6   ┌─────────────────────────────────────────────────┐          │
  │         │   SUBTRACT TOTAL TIME OF TIME INTERVALS Δt       │          │
  │         │   FROM OCCUPANCY START TIME TO DETERMINE         │          │
  │         │   PRE-COOLING OR PRE-HEATING START TIME          │          │
  │         └─────────────────────────────────────────────────┘          │
  │                                     ▼                                  │
  │ S 4 7          ╱─────────────────────────╲     N O                    │
  │               ╱   PRE-COOLING OR          ╲──────────────┐            │
  │               ╲   PRE-HEATING START       ╱              │            │
  │                ╲     TIME REACHED?       ╱               │            │
  │                        Y E S                                          │
  └─────────────────────────────────────┼─────────────────────────────────┘
                                         ▼
  S 4 8          ┌─┬─────────────────────────────────┬─┐
                 │ │   POWER-SAVING                   │ │
                 │ │   CONTROL PROCESS                │ │
                 └─┴─────────────────────────────────┴─┘
                                         ▼
  S 4 9          ┌─┬─────────────────────────────────┬─┐
                 │ │   NORMAL CONTROL                 │ │
                 │ │   PROCESS                        │ │
                 └─┴─────────────────────────────────┴─┘
                                         ▼
                        ╭─────────────────────────────╮
                        │  AIR-CONDITIONING DEVICE     │
                        │  CONTROL PROCESS END         │
                        ╰─────────────────────────────╯
```

FIG. 13

FIG. 14

## FIG. 15

90

### AIR-CONDITIONING DEVICE CONTROL MODULE

91

### NORMAL CONTROL SECTION

101

| PROPORTIONAL CONTROL UNIT |

102

| INTEGRAL CONTROL UNIT |

103

| DIFFERENTIAL CONTROL UNIT |

END POWER-SAVING CONTROL

93

### POWER-SAVING TIMER CONTROL SECTION

144

PRE-COOLING OR PRE-HEATING START TIME

| EIGHTH COMPUTATIONAL UNIT |

143

OCCUPANCY START TIME

AIR-CONDITIONING INFORMATION

| SEVENTH COMPUTATIONAL UNIT |

142

OCCU-PANCY INFOR-MATION

| SIXTH COMPUTATIONAL UNIT |

141

SET VALUE

ESTIMATED VALUE

| FIFTH COMPUTATIONAL UNIT |

END POWER-SAVING TIMER CONTROL

92

CURRENT LIMIT COMMAND

USER INPUT

### POWER-SAVING CONTROL SECTION

FIG. 16

~ 9 0

**AIR-CONDITIONING DEVICE CONTROL MODULE**

9 1
~

**NORMAL CONTROL SECTION**

1 0 1          1 0 2                    1 0 3
~            ~                       ~

| PROPORTIONAL CONTROL UNIT | INTEGRAL CONTROL UNIT | DIFFERENTIAL CONTROL UNIT |

END POWER-SAVING CONTROL

PERMISSION
DETERMINATION      OPERATION
REQUEST            START NOTIFICATION

9 3
~

**POWER-SAVING TIMER CONTROL SECTION**

1 4 4              1 4 3                1 4 2              1 4 1
~                ~                   ~                 ~

| EIGHTH COMPUTATIONAL UNIT | PRE-COOLING OR PRE-HEATING START TIME | SEVENTH COMPUTATIONAL UNIT | OCCUPANCY START TIME / AIR-CONDITIONING INFORMATION | SIXTH COMPUTATIONAL UNIT | OCCU-PANCY INFOR-MATION | FIFTH COMPUTATIONAL UNIT | SET VALUE / ESTIMATED VALUE |

END POWER-SAVING
TIMER CONTROL

9 2
~

**POWER-SAVING CONTROL SECTION**

USER INPUT

FIG. 17

AIR-CONDITIONING DEVICE CONTROL MODULE

NORMAL CONTROL SECTION

PROPORTIONAL CONTROL UNIT | INTEGRAL CONTROL UNIT | DIFFERENTIAL CONTROL UNIT

END POWER-SAVING CONTROL

PRESENCE DETERMINATION DATA

AIR-CONDITIONING STOP COMMAND

POWER-SAVING TIMER CONTROL SECTION

EIGHTH COMPUTATIONAL UNIT

PRE-COOLING OR PRE-HEATING START TIME

SET TEMPER-ATURE MOD-IFICATION COMMAND

SEVENTH COMPUTATIONAL UNIT

OCCUPANCY START TIME

AIR-CONDITIONING INFORMATION

SIXTH COMPUTATIONAL UNIT

OCCU-PANCY INFOR-MATION

FIFTH COMPUTATIONAL UNIT

SET VALUE

ESTIMATED VALUE

END POWER-SAVING TIMER CONTROL

POWER-SAVING CONTROL SECTION

USER INPUT

FIG. 18

# FIG. 19

FIG. 20

HEMS CONTROL PROCESS START

S61   OPERATION COMMAND?   NO

YES

S62   READ VARIOUS FLAGS

S63   DISTANCE FLAG IS 1?   NO

YES

S64   NO   DISTANCE BETWEEN TRANSMISSION SOURCE OF OPERATION COMMAND AND TRANSMISSION DESTINATION OF OPERATION COMMAND (HOME) IS WITHIN THRESHOLD DISTANCE?

S65   TIME FLAG IS 1?   NO

YES

S66   ESTIMATED ARRIVAL TIME IS WITHIN THRESHOLD TIME?   NO

YES

YES

S67   POWER-SAVING CONTROL PROCESS

HEMS CONTROL PROCESS END

48

# FIG. 21

```
        ( HEMS CONTROL PROCESS START )
                         │
S 8 1              ┌─────┴─────┐      N O
              <    OPERATION     >─────┐
                    COMMAND?           │
                   │                   │
                 Y E S                 │
S 8 2    ┌────────┴──────────────┐     │
         │ SPECIFY RELEVANT USER FROM  │
         │ IDENTIFICATION CODE INCLUDED│
         │   IN OPERATION COMMAND      │
         └────────┬──────────────┘     │
                  │                     │
S 8 3    ┌────────┴──────────────┐     │
         │ ACQUIRE LIFESTYLE PATTERN   │
         │  DATA CORRESPONDING TO      │
         │     RELEVANT USER           │
         └────────┬──────────────┘     │
                  │                     │
S 8 4    ┌────────┴──────────────┐     │
         │ SPECIFY AIR-CONDITIONING    │
         │  DEVICE CORRESPONDING       │
         │  TO ACQUIRED LIFESTYLE      │
         │     PATTERN DATA            │
         └────────┬──────────────┘     │
                  │                     │
S 8 5        ┌────┴────┐         N O   │
          < RELEVANT USER'S >──────────┤
            RETURN HOME
             DETECTED?
                  │
                Y E S
S 8 6    ┌────────┴──────────────┐
         │ CONTROL AIR-CONDITIONING    │
         │  DEVICE CORRESPONDING TO    │
         │ ACQUIRED LIFESTYLE PATTERN  │
         │    BASED ON ACQUIRED        │
         │    LIFESTYLE PATTERN        │
         └────────┬──────────────┘
                  │
        ( HEMS CONTROL PROCESS END )
```

# FIG. 22

## INTERNATIONAL SEARCH REPORT

| International application No. |
|---|
| PCT/JP2013/073082 |

**A. CLASSIFICATION OF SUBJECT MATTER**
*F24F11/02* (2006.01)i

According to International Patent Classification (IPC) or to both national classification and IPC

**B. FIELDS SEARCHED**

Minimum documentation searched (classification system followed by classification symbols)
F24F11/02

Documentation searched other than minimum documentation to the extent that such documents are included in the fields searched

| Jitsuyo Shinan Koho | 1922–1996 | Jitsuyo Shinan Toroku Koho | 1996–2013 |
|---|---|---|---|
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2011-144956 A (Mitsubishi Electric Corp.),<br>28 July 2011 (28.07.2011),<br>paragraphs [0012], [0120]<br>(Family: none) | 1,7-11,14-16<br>2-6,12-13 |
| Y | JP 11-201523 A (Mitsubishi Electric Corp.),<br>30 July 1999 (30.07.1999),<br>paragraphs [0015], [0016], [0018], [0027],<br>[0035], [0038]<br>(Family: none) | 1,7-11,14-16 |
| Y | JP 2012-167924 A (Daikin Industries, Ltd.),<br>06 September 2012 (06.09.2012),<br>paragraphs [0012], [0133], [0134]<br>(Family: none) | 1,7-11,14-16 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 October, 2013 (08.10.13) | 15 October, 2013 (15.10.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/073082 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2000-257939 A  (Hitachi, Ltd.),<br>22 September 2000 (22.09.2000),<br>paragraph [0039]<br>(Family: none) | 7-11,14-16 |
| Y | JP 2010-276212 A  (Panasonic Electric Works Co.,<br>Ltd.),<br>09 December 2010 (09.12.2010),<br>paragraphs [0038], [0039], [0045], [0046]<br>(Family: none) | 9-11,14-16 |
| Y | JP 2013-164187 A  (Daikin Industries, Ltd.),<br>22 August 2013 (22.08.2013),<br>paragraphs [0042] to [0046]<br>(Family: none) | 10-11,14-16 |
| Y | JP 2011-153735 A  (Mitsubishi Heavy Industries,<br>Ltd.),<br>11 August 2011 (11.08.2011),<br>paragraph [0034]<br>(Family: none) | 11,14-16 |
| Y | JP 2012-233689 A  (Mitsubishi Electric Corp.),<br>29 November 2012 (29.11.2012),<br>paragraphs [0136], [0137]<br>(Family: none) | 16 |
| A | JP 11-14119 A  (Matsushita Electric Industrial<br>Co., Ltd.),<br>22 January 1999 (22.01.1999),<br>paragraph [0009]<br>(Family: none) | 1 |
| A | JP 2013-72568 A  (Toshiba Corp.),<br>22 April 2013 (22.04.2013),<br>paragraphs [0038] to [0043]<br>(Family: none) | 6 |

Form PCT/ISA/210 (continuation of second sheet) (July 2009)

**EP 3 040 633 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63161338 A